(19)

Europäisches
Patentamt
European
Patent Office
Office européen
des brevets

(11)  **EP 2 281 097 B1**

(12)  # EUROPEAN PATENT SPECIFICATION

(45) Date of publication and mention
of the grant of the patent:
**24.10.2018  Bulletin 2018/43**

(51) Int Cl.:
*E06B 1/60* *(2006.01)*    *F16B 5/02* *(2006.01)*

(21) Application number: **09739069.4**

(86) International application number:
**PCT/SE2009/050258**

(22) Date of filing: **12.03.2009**

(87) International publication number:
**WO 2009/134188 (05.11.2009 Gazette 2009/45)**

(54) **IMPROVED FRAME ATTACHMENT MEANS**

VERBESSERTE RAHMENFIXIERVORRICHTUNG

MOYEN DE FIXATION DE CADRE PERFECTIONNÉ

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(30) Priority: **30.04.2008  SE 0800975**

(43) Date of publication of application:
**09.02.2011  Bulletin 2011/06**

(73) Proprietor: **Jeld-Wen Sverige AB
265 81 Åstorp (SE)**

(72) Inventor: **BRESMAN, Jonas
S-260 60 Kvidinge (SE)**

(74) Representative: **Zacco Sweden AB
P.O. Box 5581
114 85 Stockholm (SE)**

(56) References cited:
**WO-A1-90/04695          WO-A1-98/01647
WO-A1-2007/145580    WO-A1-2007/145584
GB-A- 2 123 513          SE-C- 188 650**

Printed by Jouve, 75001 PARIS (FR)

**Description**

TECHNICAL FIELD

The invention relates to a frame screw comprising a cylinder-shaped unit with a threaded outer casing designed with a through-and-through channel in an axial direction comprising a first section designed with a cross section in a radial direction suitable for fitting a tool that shall rotate the cylinder-shaped unit. The frame screw comprises a fastening means that is suitable to fit in the channel.

BACKGROUND ART

Doors and windows comprise a frame that surrounds a main part. The main part may consist of a pivotable unit such as a door or a window, both being pivotably fastened to one side of the frame. The main part can for windows also consist of a firmly mounted unit of glass.

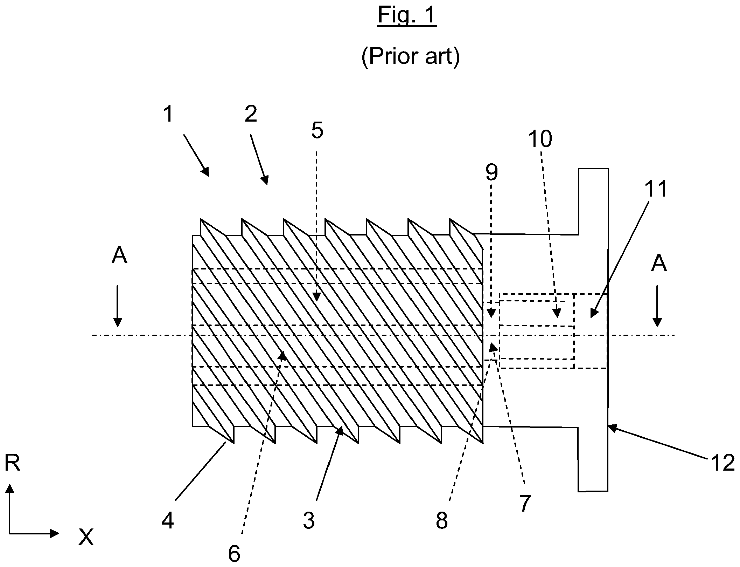

During installation of doors and windows in a house it is known to use frame screws to fasten the frame to the building. The frame screw comprises a casing in the shape of a cylinder-shaped unit with a threaded casing, and a fastening means in the shape of a screw. The enclosed figures 1-4 show a previously known frame screw and the description below can be read in relation to these figures.

The cylinder-shaped unit is designed with a through-and-through channel in an axial direction. The channel is in a first section designed with a cross section in a radial direction suitable for fitting a tool and can be constituted by, for instance a triangular, square, pentagonal, hexagonal or any other suitable cross section to admit a good engagement between the tool and the channel. In the channel there is also a flange comprising an especially designed fitting part. The fitting part is intended to receive a tool with the corresponding shape as the fitting part, for instance triangular, square, pentagonal, hexagonal or any other suitable shape to admit a good engagement between the tool and the fitting part. The screw that is part of the frame screw is intended to be fastened into the building and in such a way as to give rise to a joining bond between the frame and the building. The screw is fitted into the channel in such a way that the head of the screw and a part of the fastening means that extends from the head is hidden in the channel, but the remaining part of the screw extends from the cylinder-shaped unit and is intended to be fastened into the body of the building. The head of the screw is intended to, during the installation of the frame, be in contact with the flange by means of pressure as the screw is screwed into the building as described below.

During installation of doors and windows the following stages are performed:

- In the frame a hole is pre-drilled in which the cylinder-shaped unit is threaded via the outer threads with the aid of the tool arranged in the fitting part. The cylinder-shaped unit is screwed into the hole in such a way that essentially the whole of the cylinder-shaped unit is hidden in the hole.

- The frame is arranged in an arranged opening in the body of the building where after the screw is inserted into the channel from the inside of the frame, i.e. from the side of the frame towards which the door/window will face.

- The fastening means is there after screwed into the body of the building.

According to a known design of a frame screw the installation of the frame screw is complete after that the screw is screwed into the body of the building, but according to another design one step remains, namely that:

- The cylindrical unit by means of a tool inserted into the channel from the inside of the frame partly is screwed out from the frame until the cylindrical unit is in contact with the body of the building and exerts a pressure on the body of the building from the frame. Through the pressure the position of the frame can be controlled in relation to the body of the building. If the cylindrical unit to a great extent has changed position, it may be necessary to screw in the fastening means further in order to obtain a joining bond between the frame screw (and thereby the frame) and the body of the building.

Both of the above mentioned designs have been available on the market for over 50 years and have during the entire time been connected to a well-known problem. The problem relates to the fact that the frame moves in relation to the body of the building after installation. For an openable door or an openable window the tolerances are small between the frame and the pivotable unit. For that reason a small displacement of the frame is sufficient in order for the pivotable unit to in some parts obtain a negative allowance in relation to the frame. In the event that such a situation arises the frame has to be adjusted in order to again obtain a positive allowance. It has long been known that such adjustments are necessary for a period "until the door has set".

A particular problem exists when the frame screw is to be used for concrete, steel and brick and other material that requires a stopper into which the fastening means is to be screwed. In order to apply the stopper a hole has to be drilled via the cylinder-shaped unit. Since the stopper has an outer diameter that exceeds the diameter of the fastening means a drill bit with a diameter that exceeds the diameter of the fastening means must be used. The drill bit is lead through the cylinder-shaped unit and the hole is drilled in the body of the building. The stopper is applied in the drilled hole after being lead through the cylinder-shaped unit. As the channel must have a diameter that fits the drill bit and the stopper, and as the fastening means has must have a smaller diameter suitable to be screwed into an existing smaller diameter of the stopper, there is a large difference in diameter between the channel and the fastening means whereupon the above mentioned rotation of the frame arises.

Document WO 98/01647 discloses a frame screw according to the preamble of claim 1.

Document WO 2007/145584 A1 addresses the same problem but offers an alternative solution.

There thus exists a long known problem according to the above and thus a long known need for an improved arrangement and an improved method of approach during installation of doors and windows, especially when the door/window comprises a pivotable unit.

SUMMARY OF THE INVENTION

The present invention intends to solve the above mentioned problems through a frame screw comprising a cylinder-shaped unit with a threaded outer casing. The cylinder-shaped unit is designed with a through-and-through channel in an axial direction. The channel comprises a first section at least partly designed with a cross section in a radial direction suitable for fitting a tool that will rotate the cylinder-shaped unit. The cross section of the channel can be constituted by, for instance, a triangular, square, pentagonal, hexagonal or any other suitable cross section to admit a good engagement between the tool and the channel. The channel also comprises a flange comprising an inner section.

The frame screw comprises a fastening means suitable to fit into the channel. With suitable to fit means that the fastening means can run free in the channel in the axial direction and that the cylinder-shaped unit can be rotated around the fastening means when the fastening means is firmly arranged in an outer unit, for instance the body of a building.

According to the present invention the fastening means comprises a head with an outer part arranged to fit into the first section, where the first section has a cross section $D3$ in a radial direction adjusted to a length $L6$ in an axial direction and a cross section $D4$ in a radial direction of the head. The three parameters $D3$, $D4$ and $L6$ are adjusted in such a way that the inner side of the first section limits the heads possibility to tilt which limits the freedom of motion of an existing central axis of the fastening means in relation to an existing central axis of the cylinder-shaped unit to a motion of a maximally predetermined range at the end surface of the cylinder-shaped unit. With "tilt" is meant a rotation in an angle in relation to an imagined axis of the centre of rotation of the cylinder-shaped unit, i.e. in relation to the central axis.

An advantage of the invention is that the problems of misaligning the frames are reduced as the freedom of motion is controlled.

With an increased length $L6$ of the head the pivotable freedom of motion is reduced, on condition that the length of the head $L6$ does not exceed the first section's length in the axial direction. The radial freedom of motion is reduced with reduced difference between $D3$ and $D4$.

The smallest length $D3$ of the first section is preferably larger than the greatest length $D4$ of the head to admit that the head can be rotated in the first section. The head preferably has an essentially circular cross section which gives that the greatest length $D4$ is a diameter, otherwise it is a measure taken through the centre of rotation of the fastening means.

As mentioned above, the first section is at least partially designed with a cross section in radial direction suitable for fitting a tool that will rotate the cylinder-shaped unit. The first section comprises elevations (hereafter called bars) and depressions (hereafter called groves) intended to form a gripping fit with the tool. The smallest distance between the bars taken through the central axis of the cylinder-shaped unit here constitutes the smallest length $D3$ of the first section. According to one example a first part of the first section may comprise bars and groves according to the above, and a second part may have a circular section where the second length $D3$ is constituted by a diameter. The first part is placed in conjunction to the orifice of the cylinder-shaped unit for access by the tool. The second part is placed between the first part and the flange. In all cases shall the head be able to rotate in the first section and the outer part of the head shall be limited in its freedom of motion either by the bars and/or the cylinder-shaped inner side in the first section for guidance and control of the freedom of motion of the central axis of the fastening means in relation to the central axis of the cylinder-shaped unit to a motion of a maximally predetermined range at the end surface of the cylinder-shaped unit.

According to one example the head is designed according to the following parameters for calculating the motion of the central axis of the fastening means at the end surface of the cylinder-shaped unit;

L6 = the length of the head in the axial direction

D3 = the smallest length of the first section

D4 = the greatest length of the head

L4 = the distance between the head of the fastening means and end surface of the cylinder-shaped unit (excluding the head) along the central axis of the fastening means as the head of the fastening means is in contact with the flange

$\alpha$ = the angle between the central axis of the fastening means and the central axis of the guidance device

Rrad2 = the maximal radial motion of the central axis of the fastening means for given L4, L6, D3 and D4 in relation to the central axis of the cylinder arrangement.

Rvrid2 = the maximal rotational motion of the central axis of the fastening means for given L4, L6, D3 and D4 in relation to the central axis of the cylinder arrangement.

$$Rrad2 = (D3-D4)/2$$

$$\alpha = \arcsin((2 \times Rrad2)/L6) \text{ for small angles } \alpha$$

$$Rvrid2 = L4 \times \tan(\alpha) \times 1/2$$

For further guidance and control of the radial freedom of motion of the central axis of the fastening means in relation to the central axis of the cylinder-shaped unit the frame screw may according to one embodiment of the invention comprise an adapter arranged at least partly in the channel. The adapter comprises an outer part arranged to fit into the channel and an inner part arranged to constitute at least a part of a guidance part. The inner part of the adapter thus comprises a channel, i.e. a through-and-through hole.

The guidance part has a cross section D1 in a radial direction adjusted to a length L1 of the guidance part in an axial direction in such a way that the guidance part limits the radial freedom of motion of an existing central axis of the fastening means in relation to an existing central axis of the guidance part to a motion of a maximally predetermined range at the end surface of the cylinder-shaped unit.

An advantage of the embodiment example is that the frame screw admits a more robust joining bond between the frame and the body of the building where the previously named problems with that the frame rotates have been eliminated or at least considerably reduced.

The motion of the fastening means is constituted by two possible directions of motion. The first direction of motion is constituted by a translatory motion in a radial direction (hereafter called radial freedom of motion, Rradiell) where the entire fastening means is moved in parallel. The second direction of motion is constituted by that the fastening means can rotate in the guidance part (hereafter called rotatable freedom of motion, Rvrid).

There exists a relation between the radial freedom of motion; the length of the head and/or the length of the guidance part; and the rotatable freedom of motion which will be described more closely below.

In order for the cylinder-shaped unit to be able to rotate around the fastening means it is required that there exists a positive allowance between the fastening means and the guidance part, or at least a zero allowance.

The fastening means can be constituted by a screw or a nail or similar. The screw preferably comprises a support part in the shape of a cylindrical part with a smooth jacket surface suitable to fit in such a way that the above mentioned limitation of the motion of the fastening means is achieved. Even a nail can comprise a support part in the shape of such a cylindrical part but the support part can also consist of a number of groves or similar where the outer part of the groves, seen from a radial direction, constitutes support surfaces in and against the guidance part.

According to a first example of the invention where the frame screw comprises an adapter the channel comprises a flange comprising a part of the guidance part and a specially designed fitting part. The guidance part is here placed between the first part and the fitting part. The fitting part is placed between the guidance part and an existing end surface of the cylinder-shaped unit. The end surface has an extension in a plane in a radial direction. The fitting part is intended to receive a tool with the same design as the fitting part, for instance triangular, square, pentagonal, hexagonal or any suitable shape to admit a good engagement between the tool and the fitting part. The adapter can be arranged in the channel in such a way that the inner section of the flange together with the inner part of the adapter forms the guidance part. The adapter can also be arranged in the channel in such a way that the outer part of the adapter is adjusted to the inner section of the flange and the fitting part in such a way that only the inner part of the adapter forms the guidance part.

According to a second example of the invention with adapter the channel comprises only the first section and the flange. The adapter is here arranged in the flange's inner section. As in the first example above the guidance part is placed between the first part and the end surface of the cylinder-shaped unit. The end surface preferably comprises a peripheral part in the shape of a flange designed to receive a tool with corresponding design as the peripheral part, for instance triangular, square, pentagonal, hexagonal or any other suitable shape to admit a good engagement between the tool and the peripheral part during rotation of the cylindrical unit. The end surface does not have to have such a peripheral part designed to receive a tool, but can comprise one or several cavities or similar intended for a tool with the corresponding protruding parts intended to be used during rotation of the cylindrical unit.

The frame screw as mentioned above is intended to be used for assembly of a door arrangement or a window arrangement in a building. The arrangement comprises a frame that is intended to be fastened into the body of the building where after the door or the window itself is assembled into the frame. The cylinder-shaped unit of the frame screw is screwed into the frame from the outside of the frame, i.e. from the side of the frame facing towards the body of the building, with the help of a tool mounted into the fitting part or the peripheral part or in another suitable arrangement for fitting a tool. The frame is thereafter positioned into an arranged opening in the body of the building where after the fastening means is inserted into the channel from the inside of the frame, i.e. from the side of the frame facing away from the body of the building. The fastening means is there after attached to the building forming a joining bond between the frame and the building. The cylinder-shaped unit is furthermore screwed out of the frame in a direction towards the body of the building by means of a tool mounted in the first part. The cylinder-shaped unit is screwed out of the frame until an existing end surface of the cylinder-shaped unit is in contact with the building, at which the joining bond between the frame and the body of the building is reinforced and that the distance between the frame and the building is fixed. The fastening means is there after inserted further in a direction towards the body of the building until an existing head of the fastening means is in contact with the existing flange in the channel in such a way that the fastening means exert a pulling force on the flange in a direction towards the body of the building.

When the frame screw has been screwed into place in the frame the fitting part according to the embodiments and the examples above is no longer necessary for the function of the frame screw. According to a first alternative of the invention with adapter the guidance part has such a length and such tolerance to the support part of the fastening means that the radial freedom of motion of the fastening means is limited according to the above. According to a second alternative the frame screw comprises an adapter comprising an outer part with a design corresponding to the fitting part and an inner part with corresponding measures as the guidance part in the flange. The inner part of the adapter thus constitutes a part of the frame screws guidance part and thus lengthens the extension of the guidance part in an axial direction. An advantage of such an arrangement is that the guidance part's tolerances to the fastening means's support part can be increased, i.e. that the allowance between the fastening means and the guidance part can be larger with increased length and maintained radial freedom of motion. According to a third alternative the adapter is designed to fit into both the fitting part and the guidance part. The inner part of the adapter this constitutes the whole of the guidance part of the frame screw and can be adjusted. An increased tolerance can provide a less expensive manufacturing process of the frame screw and further more can previously known frame screws be converted to a better and more robust frame screw.

The adapter can be manufactured of plastic and/or metal and/or any other material that easily and inexpensively can be shaped according to the above.

The reason that the tolerances can be increased is that the rotational freedom of motion decreases with increased length of the guidance part according to the following equation:

L1 = the length of the guidance part in axial direction

L2 = the distance between the guidance part and the end surface (including the guidance part) of the cylinder-shaped unit

D1 = the diameter of the guidance part

L3 = the length of the guidance part in axial direction along the central axis of the fastening means

L4 = the distance between the head of the fastening means and the end surface (excluding the head) of the cylinder-shaped unit along the central axis of the fastening means as the head of the fastening means is in contact with the flange.

D2 = the diameter of the support part

α = the angle between the central axis of the fastening means and the central axis of the guidance part

Rradiell = the maximal radial motion of the central axis of the fastening means for given L1-L4, D1 and D2 in relation to the central axis of the cylinder arrangement.

Rvrid = the maximal rotational motion of the central axis of the fastening means for given L1-L4, D1 and D2 and in relation to the central axis of the cylinder arrangement.

$$Rradiell = (D1-D2)/2$$

$$\alpha = arctan((D1-D2)/L1)$$

$$Rvrid = L4 \times tan(\alpha) \times 1/2$$

$$Rvrid = L4 \times (D1-D2)/L1 \times 1/2$$

Notable is that for a rotated fastening means Rvrid according to the above is an approximation. L4 is measured when the central axis of the fastening means is parallel to the central axis of the guidance arrangement. The point on the central axis of the fastening means that constitutes the measuring point for Rradiell and Rvrid is taken in the plane that coincides with the end surface of the cylinder-shaped unit. The same measuring point will during pivoting be slightly inside of said plane and the distance from the measuring point to the plane constitutes the approximation. The approximation is valid for small values of α.

L3 should always be equal to L1 or larger than L1 since, for instance a screw with a smaller L3 gives that the threaded section of the screw, which can have a different diameter than the support part, is located in the guidance arrangement and can alter the conditions for the freedom of motion of the fastening means. For the same reason is L3 always equal to or greater than L4.

L2 is always equal to or larger than L1 and the larger L2 is in relation to L1 the smaller is the length of the guidance part. The guidance part has a maximal length L1 = L2 depending on the definition of L2.

According to the equations above you see that when L1 increases Rvrid and α decreases, but Rvrid increases with the increase of L4. Thus, in the first case L1 and L3 have to be adjusted to L4 in order not to exceed the maximally allowed value of Rvrid.

In the second and third alternative, and in the second example L4 = L1 = L2 and L3 may be varied but when L3 = L4, Rvrid = Rradiell. This does not affect the angle α, but an increase of L1 reduces the angle α and reduces the possibility of misalignment of the frame.

In the first example's second and third alternative respectively the inner part of the adapter and the guidance parts, and only the inner part of the adapter respectively, form a guidance part where L4 = L1 which according to the above gives that Rvrid = Rradiell with the advantages discussed above.

According to a third example of the invention with adapter the flange comprises an especially adapted section, for instance in the shape of a cone and the head of the fastening means a corresponding part. The fastening means is thus fitted into the guidance part of the channel in such a way that the especially adapted part of the head is fitted into the adapted part of the flange and also that the support part of the fastening means is fitted into the guidance part. An advantage with the example is that the especially designed section of the flange constitutes a part of the guidance part and controls the especially designed part of the fastening means in such a way that the motion of the fastening means relative to the cylinder-shaped unit is minimized. This is due to that the head of the fastening means, during installation of the frame, is in contact with the flange by means of pressure as the fastening means is screwed into the building as described below.

According to a fourth example of the invention with adapter the channel comprises a flange comprising the guidance part and an especially designed fitting part. The fitting part is here placed between the first part and the guidance part. The guidance part is placed between the guidance part and an existing end surface of the cylinder-shaped unit. The end surface has an extension in a plane in a radial direction. The fitting part is intended to receive the adapter which is arranged with the corresponding design as the fitting part, for instance with a cross section that is round, triangular, square, pentagonal, hexagonal or any other geometric shape. The outer part of the adapter may have a different design than the fitting part if the outer part still fits into the fitting part in such a way that the adapter is not loose in the fitting part. The adapter thus preferably comprises an outer part with a design that corresponds to the fitting part and an inner part with corresponding measures as the guidance part in the flange. The inner part of the adapter together with the guidance part forms a channel and thus constitutes a part of the frame screws guidance part and thus lengthens the guidance part extension in the axial direction.

An advantage with such an arrangement is that the tolerances of the guidance part to the support part of the fastening means can be increased, i.e. the allowance between the fastening means and the guidance part may be greater with increased length and maintained radial freedom of motion.

According to another example of the invention the adapter is designed to fit in both the fitting part and the guidance part. The inner part of the adapter thus constitutes the whole of the guidance part of the frame screw and can be adjusted to desired tolerances. An increased tolerance may give a less expensive manufacturing process of the frame screw and may furthermore allow a previously known frame screw to be converted to a better and more robust frame screw.

An advantage of the invention is that the adapter provides the advantage that the channel in the cylinder-shaped unit may be larger than what is suitable for the fastening means. An advantage with that the channel may be larger is that a drill bit with a diameter that exceeds the diameter of the fastening means may be used to drill holes in a building or a beam or similar via the cylinder-shaped unit. This is essential when the frame screw is to be used with steel, concrete and brick and other materials requiring a stopper in which the fastening means is to be attached. The stopper is placed in a predrilled hole in the building drilled after that the drill bit is inserted into and through the channel of the cylinder-shaped unit. The stopper is applied in the predrilled hole after having been led through the channel of the cylinder-shaped unit. The adapter is there after arranged in the channel in such a way that the adapter fills up the too large channel and the inner part of the adapter gives a perfect adjustment to the fastening means. It is important that the adapter has a length L1 adjusted to the diameter D1 of the inner part in such a way that they together produce the guidance of the fastening means as described above.

According to all of the examples of the invention with adapter given above the guidance part is coaxially arranged in relation to the channel. An advantage with this embodiment is that the cylinder-shaped unit has the same centre of rotation as the fastening means, which leads to that the frame will not move during the rotation of the cylindrical unit in the direction of the body of the building.

The adapter can be manufactured of plastics and/or metal/and/or any other material that easily and inexpensively can be moulded according to any of the described examples. An elastic material gives an advantage with that the frame screw can pick up vibrations through the adapter. The adapter can however not be so soft as to allow for a rotation of the frame screw. The adapter is preferably arranged so that it forms a pressure joining bond with the channel, i.e. that there is a negative allowance. An advantage with this is that the adapter hardly changes position in the channel under influence of forces from the fastening means. The exterior of the adapter preferably has a design that corresponds to the design of the channel. If the first section is edged then the adapter is edged in the same way. An advantage with this is that the adapter obtains a good fitting in the channel and that it can't rotate.

According to an embodiment of the invention the fastening means comprise the adapter so that the adapter automatically is arranged in the channel as the fastening means is inserted into the channel. An advantage with this is that the fastening means and the adapter can be manufactured separately and then be assembled in order to be sold as a unit. To offer a unit to a consumer gives an advantage to the consumer who only has one thing to keep track of instead of two. Besides this the assembly of the frame screw is simplified since the adapter automatically is positioned in the right place in the channel as the fastening means is brought into place.

According to another embodiment of the invention the fastening means and the adapter is formed in one piece. According to this embodiment the inner section of the flange constitutes the guidance part. An advantage with this embodiment is just as above that the consumer only has to deal with one unit. The adapter must here be arranged to be able to rotate in the channel so that the fastening means can be arranged in the body of the building.

The adapter can be designed with a conical outer part which gives the advantage that the adapter is compressed as the head of the fastening means pushes the adapter into the first section of the channel. The channel in the first section may furthermore be conical in the same way in order to exert an even pressure on the outer part of the adapter. The channel in the first section is preferably designed with the greater part of the cone facing the part of the frame screw in which the adapter is to be inserted.

The adapter can be designed with a through-and-through slot from the outer part to the inner part. Such a slotted adapter has the advantage that the adapter can be threaded onto a fastening means comprising a threaded outer part with a diameter greater than the support part, through that the slot splits itself and widens the inner part of the adapter in such way that the threads can pass the inner part. The support part is placed between the head and the outer threaded part. The adapter may be divided in two for the same reason as it would be slotted.

The fastening means may also be threaded all the way from the head to its outer tip. The threads themselves thus constitute the support means of the fastening means. If the adapter is so soft that the threads form thread grooves in the adapter the outer part of the adapter must have a measure allowing the adapter to rotate in the channel, so that the position of the frame screw can be adjusted.

All of the above mentioned adapters and support surfaces not related to the head, gives a synergistically preferable effect together with the especially adjusted head as the total length at the guidance mechanism increases which gives an increased ability to guidance and control of the radial freedom of motion of the central axis of the fastening means in relation to the central axis of the cylinder-shaped unit to a motion of a maximally predetermined range at the end surface of the cylinder-shaped unit.

As an example can be mentioned that radial freedom of motion of the fastening means, Rradiell, at the end surface of the cylinder-shaped unit, from the central axis of the fastening means, is limited to a motion of maximally 0,5 mm in relation to the central axis of the guidance part. The value is taken at a newly mounted door in a frame with an opening between the door and the frame of about 2,5 mm. The value is thus not an absolute value for the invention but aims to visualize the possibilities of the invention to the skilled person. A smaller and greater value is thus possible and can be ensured by changing the diameter and length of the guidance part according to the description below.

The above stated values are taken as examples of empirically allowable values that give rise to an allowed rotation of the door frame so that the rotation does not give rise to a misalignment of a magnitude so great that the door can't be opened or closed without hindrance. The frame screw according to the invention gives a rotation of the frame that can be minimized by increasing the length of the guidance part in an axial direction.

During use of the adapter but without an especially designed head the rotational freedom of motion of the fastening means, from the central axis of the fastening means, is limited to an approximate maximal angle $\alpha = \arctan(1/20) \approx 2{,}9°$ in relation to the central axis as Rradiell is 0,5 mm and the guidance part is 2 cm long and extends all the way to the frame. Equations for this calculation relating to the adapter are described above. Calculating with data from the above mentioned example gives that L6 $\approx$ 2 cm for $\alpha \approx 2{,}9°$ without adapter, but that the angle $\alpha$ essentially is halved if the adapter is used together with a head according to the invention for the above stated values.

BRIEF DESCRIPTION OF THE DRAWINGS

The invention will below be described in conjunction to a number of figures where:

Fig. 1 schematically shows a casing of a frame screw according to prior art;

Fig. 2 schematically shows a cross section along the line A-A in figure 1 of a casing of a frame screw according to prior art;

Fig. 3 schematically shows a frame screw comprising a fastening means and a casing according to figure 2;

Fig. 4 schematically shows a frame screw according to figure 3 after assembly;

Fig. 5a schematically shows a cross section along the line A-A in figure 1 of a frame according to a first embodiment of the invention;

Fig. 5b schematically shows a perspective view of the frame screw according to figure 5a according to a first example of the invention;

Fig. 5c schematically shows a perspective view of the frame screw according to figure 5a according to a second example of the invention;

Fig. 6 schematically shows a frame screw comprising a fastening means and a casing according to figures 5a-5c and an adapter according to an embodiment of the invention;

Fig. 7 schematically shows a frame screw according to figure 6 after assembly;

Fig. 8 schematically shows a frame screw comprising a fastening means, a casing and an adapter according to a second embodiment of the invention;

Fig. 9 schematically shows a frame screw comprising a fastening means, a casing and an adapter according to a third embodiment of the invention;

Fig. 10 schematically shows a frame screw comprising a fastening means, a casing and an adapter according to a fourth embodiment of the invention;

Fig. 11 schematically shows a frame screw according to figure 10 but with an alternative design of the adapter;

Fig. 12 schematically shows a frame screw comprising a fastening means, a casing and an adapter according to a fifth embodiment of the invention;

Fig. 13 schematically shows a frame screw comprising a fastening means, a casing and an adapter according to a sixth embodiment of the invention;

Fig. 14 schematically shows a frame screw comprising a fastening means, a casing and an adapter according to a seventh embodiment of the invention;

Fig. 15 schematically shows a frame screw comprising a fastening means, a casing and an adapter according to an eighth embodiment of the invention;

Fig. 16 schematically shows a frame screw comprising a fastening means, a casing and an adapter according to a ninth embodiment of the invention;

Fig. 17 schematically shows a frame screw comprising a fastening means, a casing and an adapter according to a tenth embodiment of the invention;

Fig. 18 schematically shows a frame screw comprising a fastening means, a casing and an adapter according to an eleventh embodiment of the invention;

DETAILED DESCRIPTION

Fig.1 schematically shows a casing 2 of a frame screw 1 according to prior art. The casing is in the shape of a cylinder-shaped unit 3 with a threaded outer casing 4. The cylinder-shaped unit 3 is designed with a through-and-through channel 5 in the axial direction X. The channel 5 is in a first section 6 designed with a cross section in radial direction R suitable for fitting a tool, and can be constituted by for instance a triangular, square, pentagonal, hexagonal or any other suitable cross section to admit a good engagement between the tool and the first section 6. In a second section 7 of the channel 5 there exists a flange 8 comprising a circular inner section constituting a guidance part 9 and an especially designed fitting part 10. The fitting part 10 is intended to receive a tool with a corresponding design as the fitting part 10, for instance triangular, square, pentagonal, hexagonal or any other suitable cross section to admit a good engagement between the tool and the fitting part 10.

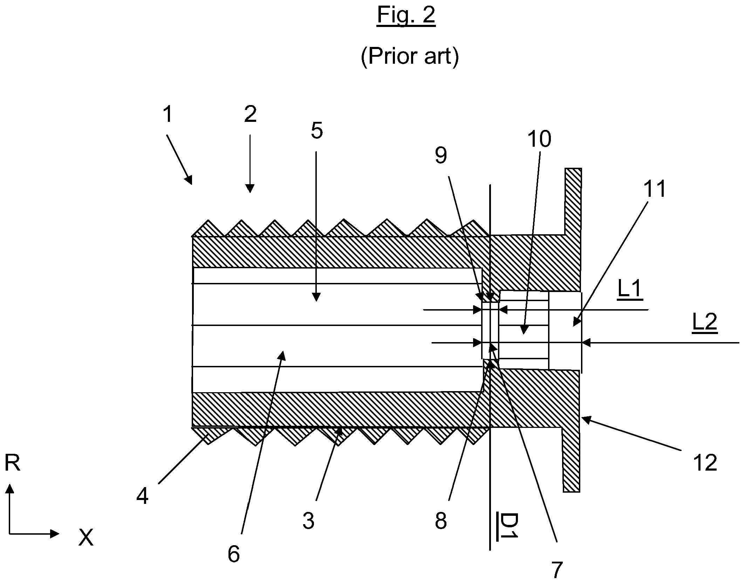

Fig. 2 schematically shows a cross section along the line A-A in figure 1 of a casing of a frame screw according to prior art. In figure 2 it is shown that the channel 5 after the fitting part 10 comprises a third section 11 with an essentially circular cross section. In figure 2 it is shown: L1 = the length in axial direction of the guidance part 9; and L2 = the distance between the guidance part 9 and the end surface 12 of the cylinder-shaped unit 3. L2 comprises the length L1 of the guidance part; D1 = the diameter of the guidance part 9.

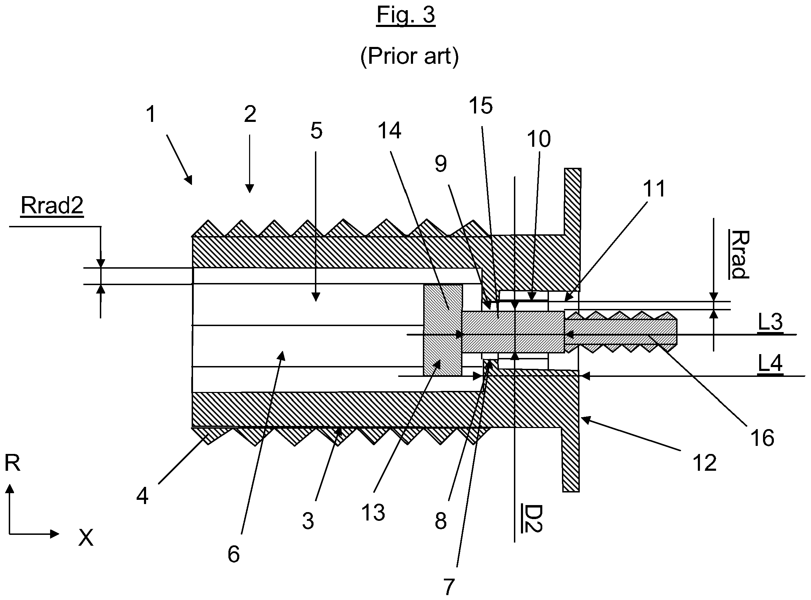

Fig. 3 schematically shows a frame screw comprising a fastening means 13 and a casing 2 according to figure 2. The fastening means 13 can move freely in the channel 5 both in a rotational direction and in axial direction X. The fastening means 13 comprises a head 14, a support part 15 and a threaded part 16. L3 = the length of the support part 15 in an axial direction along the central axis of the fastening means 13. L4 = the distance between the head 14 of the fastening means 13 and the end surface 12 of the cylinder-shaped unit 3 (excluding the head 14) along the central axis of the fastening means 13 as the head 14 of the fastening means 13 is in contact with the flange 8. D2 = the diameter of the support part 15. Rradiell = the maximal radial motion of the central axis of the fastening means 13 for given L1-L4, D1 and D2 in relation to the central axis of the cylinder-shaped 3 unit as the fastening means 13 is moved parallelly in a radial direction R in relation to the central line of the channel 5.

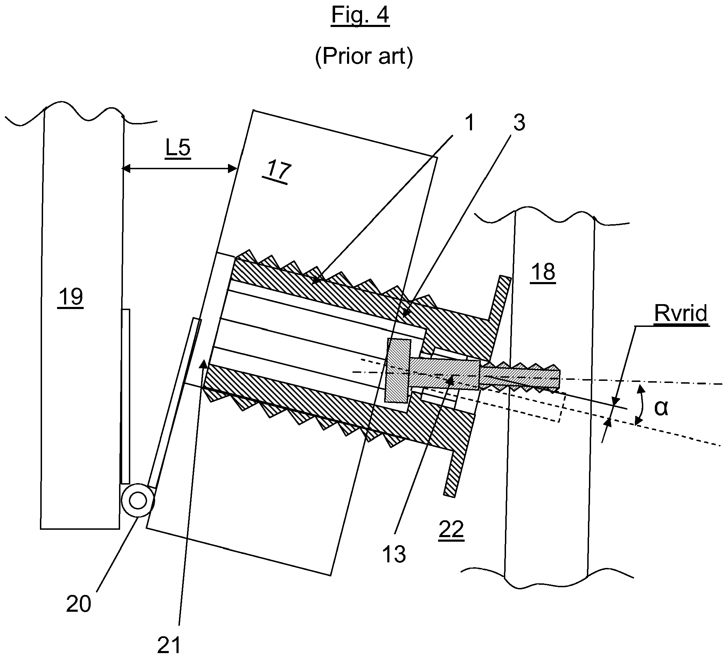

Fig. 4 schematically shows a frame screw 1 according to figure 3 after assembly in a frame 17 and in a building 18. In figure 4 it is shown that a door 19 is attached to the frame via hinges 20. The fastening means 13 of frame screw 1 is intended to be attached to the building 18 and in that way give rise to a joining bond between the frame 17 and the building 18. The fastening means 13 is fitted into the channel 5 in such a way that the head 14 of the fastening means 13 and a part of the fastening means 13 that extends from the head 14 is hidden in the channel 5, but where the greater part of the fastening means 13 protrudes from the cylinder-shaped unit 3. The head 14 of the fastening means 13 is intended to, during installation of the frame 17, be in contact with the flange 8 by means of pressure as the fastening means 13 is screwed into the building according to the description below.

In figure 4 it is shown that a hole 21 has been made in the frame 17 into which the cylinder-shaped unit 3 is threaded via the outer threads 4 and with the aid of the tool arranged in the fitting part 10 in a direction towards the door. The cylinder-shaped unit 3 is initially screwed into the hole 21 in such a way that essentially the whole of the cylinder-shaped unit 3 is hidden in the hole.

The frame 17 is there after arranged in an arranged opening 22 in the body of the building 18. The cylinder-shaped unit 3 is there after screwed in the direction of the body of the building 18 by means of a tool arranged in the first section 6 until the end surface 12 is in contact with the building 18. The fastening means 13 is there after inserted in the channel from the inside of the frame 17, i.e. from the side of the frame 17 towards the door 19 face, where after the fastening means 13 is screwed into the building 18 and forms a joining bond between the frame screw 1 (and thereby the frame) and the body of the building 18.

In figure 4 a well known problem is shown consisting of that the frame 17 can move relative to the building 18 since the fastening means 13 can move freely in a radial direction in relation to the cylinder-shaped unit 3. The problem during such a change in position has been discussed above.

Rvrid = the maximal rotational motion of the central axis of the fastening means for given L1-L4, D1 and D2 in relation to the central axis of the cylinder arrangement.

$$Rradiell = (D1-D2)/2$$

$\alpha$ = arctan((D1-D2)/L1) = the angle between the central axis of the fastening means and the central axis of the guidance arrangement.

$$Rvrid = L4 \times \tan(\alpha) \times 1/2$$

$$Rvrid = L4 \times (D1-D2)/L1 \times 1/2$$

Notable is that for a rotated fastening means Rvrid is according to the above an approximation. L4 is measured as the central axis of the fastening means lies parallel to the central axis of the guidance part. The point on the central axis of the fastening means that constitute the measuring point for Rradiell and Rvrid is taken in the plane that coincides with the end surface of the cylinder-shaped unit. The same measuring point will during rotation be slightly above said plane and the distance from the measuring point to the plane constitutes the approximation. The approximation is valid for small values of $\alpha$.

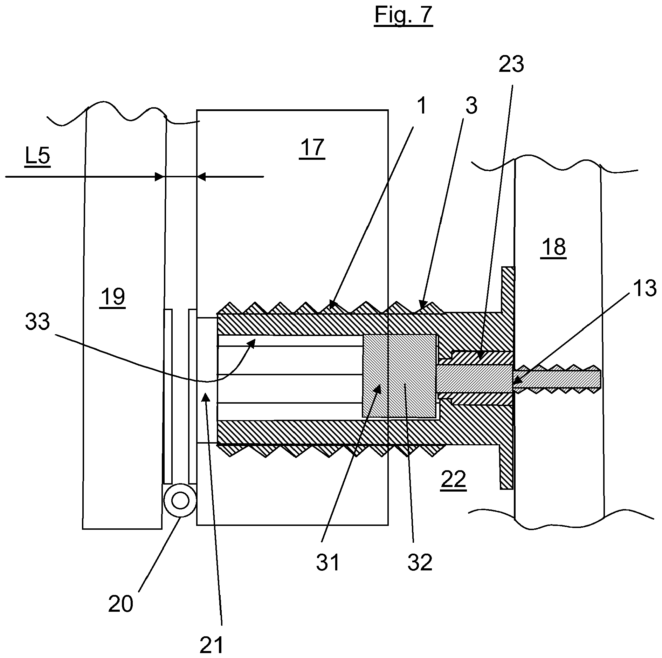

In figure 4 a length L5 that indicates an increase of the distance between the frame 17 and the door 19 due to the rotation of the frame is shown. The increase of the distance is compared to the distance L5 between the frame 17 and the door 19 when the frame is not rotated. The latter is shown in figure 7. The rotation of the frame and the increase of L5 on the hinge side are corresponded by a decrease of the distance between the frame 17 and the door 19 on the corresponding side of the door. In figure 4 it is shown that L5 decreases in the direction of the hinges 20, which indicates a rotation of the frame 17. If the frame had not rotated L5 would not have decreased.

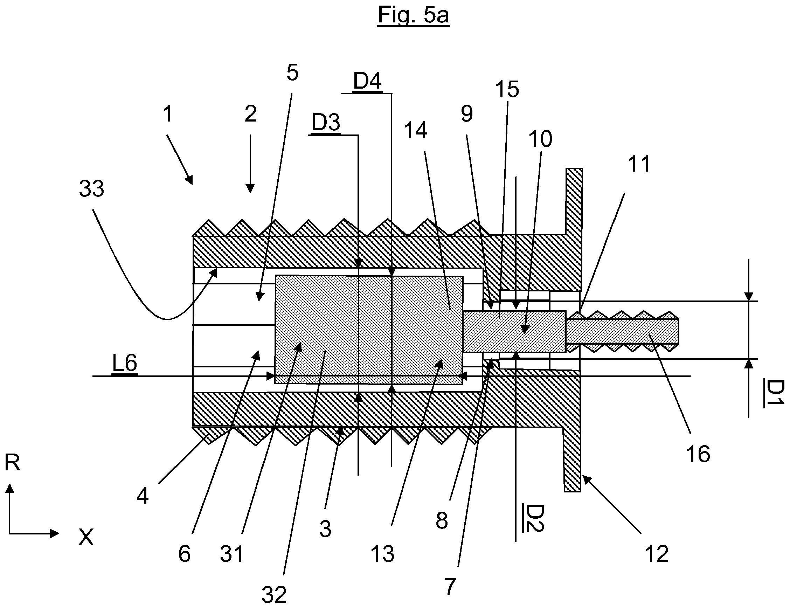

Fig. 5a schematically shows a casing 2 of a frame screw 1 according to a first embodiment of the invention. The parts of the frame screw that are shared with the prior art are in figures 5a-18 referred to with the same numbers and reference can be made to figures 1-4. The frame screw 1 comprises a cylinder-shaped unit 3 with a threaded outer casing 4 designed with a through-and-through channel 5 in an axial direction, the channel 5 comprises a first section 6 at least partly designed with a cross section D3 in a radial direction suitable for fitting a tool that will rotate the cylinder-shaped unit and also a flange 8 comprising an inner section. The frame screw 1 comprises a fastening means 13 suitable to fit into the channel 5;26 and the inner section. The fastening means 13 has a head 31 with an outer part 32 adjusted to fit into the first section 6. The first section 6 has a cross section D3 in a radial direction adjusted to a length L6 of the head 31 in an axial direction and a cross section D4 of the head 31 in a radial direction in such a way that the inner side 33 of the first section 6 limits the radial freedom of motion of an existing central axis of the fastening means 13 in relation to an existing central axis of the cylinder-shaped unit 3 to a motion of a maximally predetermined range at the end surface 12 of the cylinder-shaped unit 3. The end surface 12 has an extension in a plane in a radial direction and may be equal to or greater that the area of the cross section of the cylinder-shaped unit 3 in said plane.

With increased length L3 of the head the radial freedom of motion decreases, under the condition that length L3 of the head does not exceed the length of the first section 6 in an axial direction. The radial freedom of motion also decreases with a reduced difference between D3 and D4.

The smallest length D3 of the first section 6 is preferably smaller than the greatest length D4 of the head to allow for the head to be rotated in the first section 6. The head 31 preferably has an essentially circular cross section which gives that the greatest length D4 is a diameter. The greatest length shall always be measured through the rotational central axis of the fastening means.

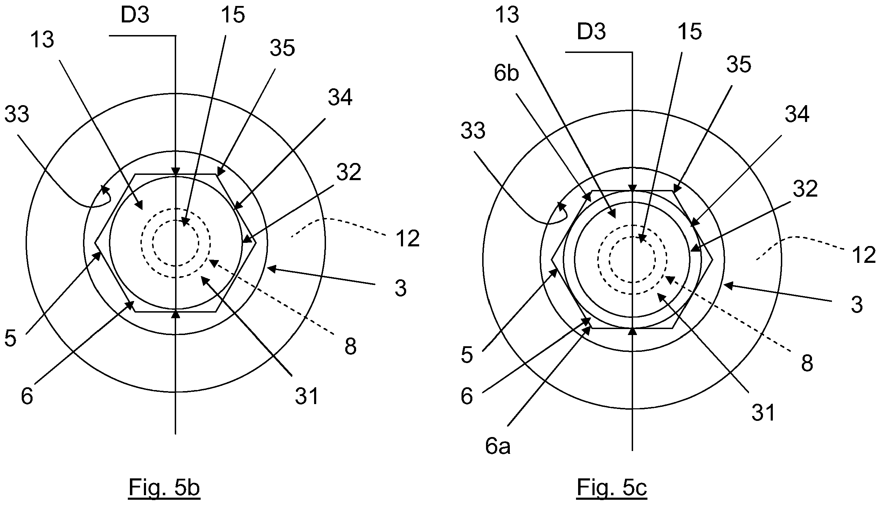

Fig. 5b schematically shows a perspective view of the frame screw according to figure 5a according to a first example of the invention. As mentioned above the first section 6 is at least partly designed with a cross section in a radial direction suitable for fitting a tool that will rotate the cylinder-shaped unit. Figure 5b shows that the first section 6 comprises elevations 34 (hereafter called bars 34) and depressions 35 (hereafter called groves 35) intended to form a gripping fit with the tool. The smallest distance between the bars 34 taken through the central axis of the cylinder-shaped unit here constitutes the smallest length D3 of the first section.

Fig. 5c schematically shows a perspective view of the frame screw according to figure 5a according to a second example of the invention. Figure 5c shows that a first part 6a of the first section comprises bars 34 and groves 35 according to above, and a second part 6b may have a circular section where the smallest length D3 is constituted by a diameter. The first part 6a is placed in conjunction to the orifice of the cylinder-shaped unit 3 for access by the tool. The second part 6b is placed between the first part 6a and the flange 8.

In both figure 5b and 5c the cross section D3 of the first section 6 in a radial direction is adjusted to the cross section D4 of the head 31 in a radial direction in order for the head to be able to be rotated in the first section and adjusted to the length L6 of the head 31 in order for the outer part 32 of the head to be limited in its radial freedom of motion of the bars 34 in the first section 6 and in occurring cases of the cylinder-shaped inside of the second part 6b for guidance and control of the radial freedom of motion of the central axis of the fastening means 13 in relation to the central axis of the cylinder-shaped unit 3 to a motion of a maximally predetermined range at the end surface 12 of the cylinder-shaped unit 3.

According to one example the head is designed according to the following parameters for calculating the motion of the central axis of the fastening means at the end surface of the cylinder-shaped unit;

L6 = the length of the head in the axial direction

D3 = the smallest length of the first section

D4 = the greatest length of the head

L4 = the distance between the head of the fastening means and end surface of the cylinder-shaped unit (excluding the head) along the central axis of the fastening means as the head of the fastening means is in contact with the flange

$\alpha$ = the angle between the central axis of the head and the central axis of the guidance arrangement

Rrad2 = the maximal radial motion of the central axis of the fastening means for given L4, L6, D3 and D4 in relation to the central axis of the cylinder arrangement.

Rvrid2 = the maximal rotational motion of the central axis of the fastening means for given L4, L6, D3 and D4 in relation to the central axis of the cylinder arrangement.

$$Rrad2 = (D3-D4)/2$$

$$\alpha = \arcsin((2 \times Rrad2)/L6) \text{ for small angles } \alpha$$

$$Rvrid2 = L4 \times \tan(\alpha) \times 1/2$$

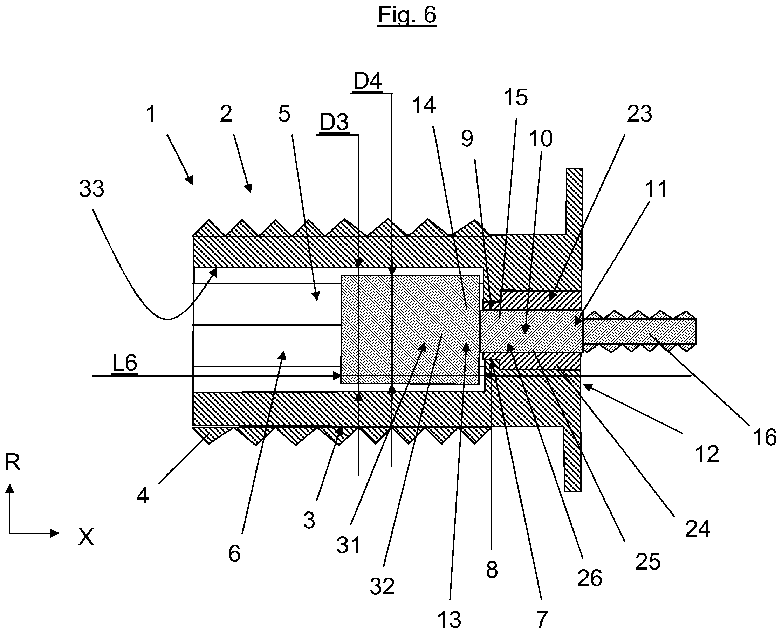

Fig. 6 schematically shows a casing 2 of a frame screw 1 comprising an adapter 23 according to one embodiment of the invention. The adapter 23 comprises an outer part 24 with a design that corresponds to the inner measure of the fitting part 10 and also the inner measure of the inner part of the third section 11 and an inner part 25 with an inner jacket surface with the corresponding measures as the inner jacket surface of the guidance part 9 in the inner section of the flange 8. The inner part 25 of the adapter 23 thus constitutes a part of guidance part 9 of the frame screw 1 and thus lengthens the extension of the guidance part 9 in an axial direction. An advantage with such an arrangement is that the tolerances of the guidance part against the support part of the fastening means can be increased, i.e. the allowance between the fastening means and the guidance part may be greater with increased length and maintained radial motion of freedom.

Fig. 6 schematically shows a frame screw 1 comprising a fastening means 13 and a casing 2 according to figures 5a-5c. In figure 6 the adapter 23 is shown mounted in the fitting part 10 and the fastening means 13 arranged in the casing 2 in the channel 26 being formed by the inner jacket surface of the flange 8 and the inner jacket surface of the adapter 23. The formed channel 26 constitutes the guidance part 9 of the frame screw 1 according to the invention. In figure 6 it is shown that the support part 15 of the fastening means 13 is as long as the guidance part 9.

Fig. 7 schematically shows a frame screw according to figure 6 after assembly into a frame 17 and the body of a building. Here a comparison will be made to the frame screw according to prior art in figure 4.

L3 should always be at least equal to L1 since, for instance a screw with a smaller L3 gives that the threaded part of the screw, which may have a different diameter than the support part 15, is in the guidance part 9 and may change the conditions for the freedom of motion of the fastening means 13.

According to the formulas above one sees that as L1 increases Rvrid and $\alpha$ decreases, but that Rvrid increases with the increase of L4. In the first case of the first embodiment L1 and L3 thus must be adjusted to L4 in order for the maximally allowed values of Rvrid to not be exceeded.

In figure 7 L1 = L2 = L3 = L4 which gives that Rvrid = Rradiell with the advantages that has been discussed above. This does not affect the angle $\alpha$ in itself, but an increase of L1 reduces the angle $\alpha$ and reduces the possibility for misalignment of the frame 17.

In figure 7 it is shown that L1 is of the length that and that D1 and D2 is adjusted to each other that the frame 18 is not given any greater space to rotate as in figure 4. In figure 7 it is also shown that L5 is essentially constant over the whole of the part that constitutes the distance between the frame 17 and the door 19.

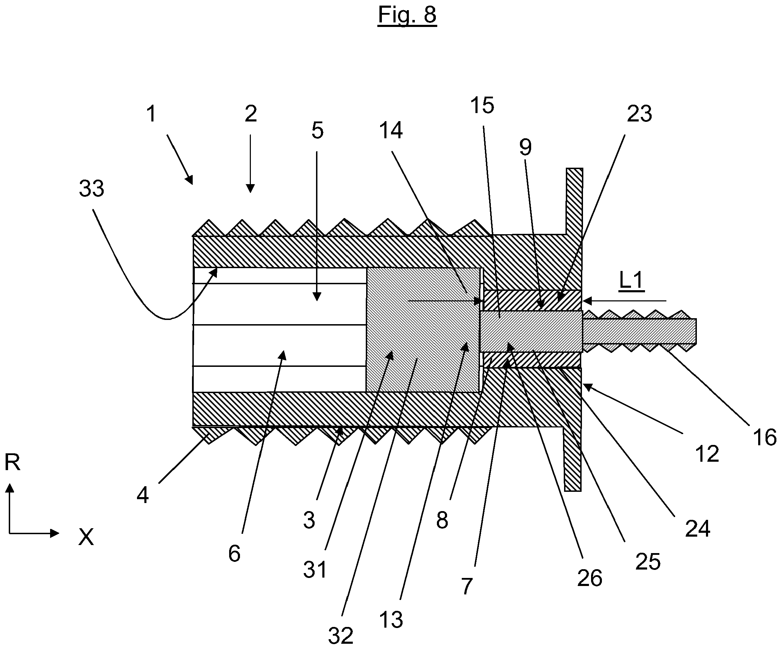

Fig. 8 schematically shows a frame screw 1 comprising a fastening means 13 and a casing 2 according to a second embodiment of the invention. The casing here comprises a flange 8 that extends all the way to the end surface 12 of the cylinder-shaped unit 3. The adapter 23 here comprises the guidance part 9 which consists of the inner jacket surface of the inner part 25 of the adapter 23. The adapter 23 comprises an outer part 24 with a design that corresponds to the inner section of the flange 8. The formed channel 26, just as in figure 6, corresponds to the guidance part 9 and has in figure 8 such a length and such a tolerance to the support part 15 of the fastening means 13 that the radial freedom of motion Rrad of the fastening means 13 is limited in the same way as during use of the adapter 23 in figures 5-7.

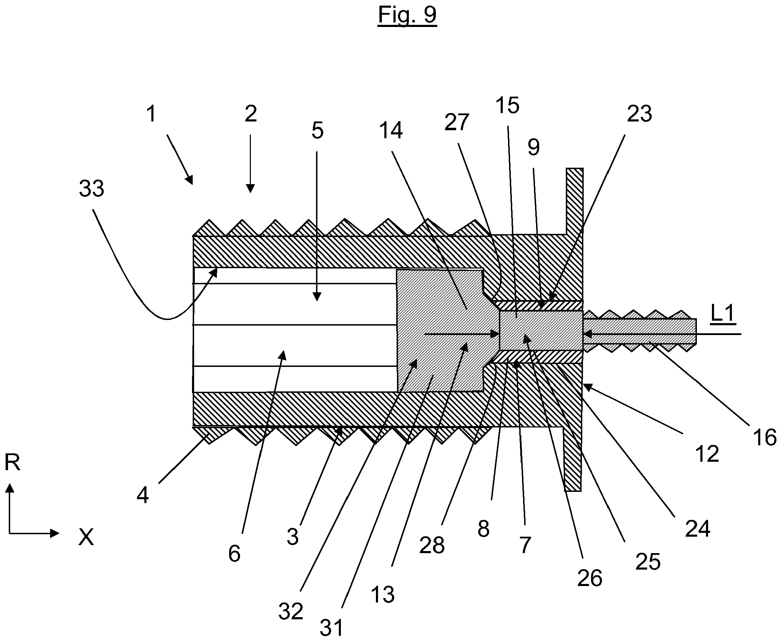

Fig. 9 schematically shows a frame screw 1 comprising a fastening means 13 and a casing 2 according to a third embodiment of the invention. Just as in figure 8 the casing comprises a flange 8 which extends all the way to the end surface 12 of the cylinder-shaped unit 3. The adapter 23 comprises the guidance part 9 which consists of the inner jacket surface of the inner part 25 of the adapter 23. The adapter 23 comprises an outer part 24 with a design that corresponds to the inner section of the flange 8. In figure 9 it is shown that the flange 8 and the adapter comprises especially adjusted sections 27 that together forms a truncated cone. The head 14 of the fastening means 13 has a corresponding part 28. The fastening means 13 is thus fitted into the guidance part 9 in such a way that the especially adjusted part 28 of the head 14 is fitted into the adjusted part 27 of the flange 8 and also that the support part 15 of the fastening means 13 are fitted into the guidance part 9. An advantage of the embodiment is that the especially designed section 27 of the flange 8 constitutes a part of the guidance part 9 and controls the especially designed part 28 of the fastening means 13 in such a way that the motion of the fastening means 13 relative to the cylinder-shaped unit is minimized. This is due to the fact that the head of the fastening means 14, during installation of the frame 17, is in contact with the flange 8 by means of pressure as the fastening means is screwed into the building 18 according to the above.

In a different embodiment of the invention it just the flange 8 that has especially adjusted sections 27 in the shape of a truncated cone. The adapter 23 may thus have straight end sections or angled end sections.

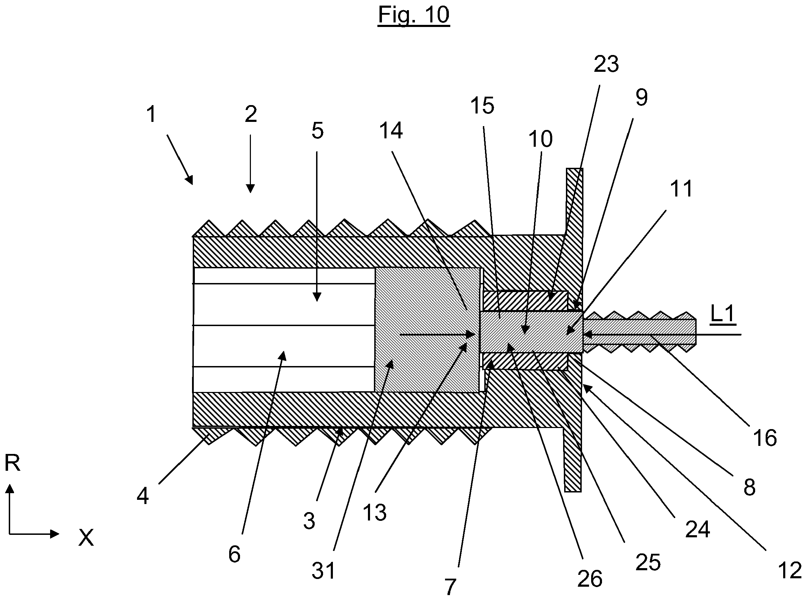

Fig. 10 schematically shows a frame screw 1 comprising a fastening means 13, a casing 2 and an adapter 23 according to a fourth embodiment of the invention. In figure 10 it is shown that the channel 5 in an axial direction comprises a sequence of a first section 6, a second section 7 and a third section 11. In figure 10 it is shown that the first section 6 is designed in such a way that a fastening means 13 with a head 14 may be arranged rotationally in the first section of the channel 5. In figure 10 it is shown that the second section 7 comprises an especially designed fitting part 10 and that the third section 11 comprises a flange 8 comprising an inner section that constitutes a guidance part 9. The fitting part 10 is here placed between the first section 6 and the guidance part 9. The guidance part 9 is placed between the fitting part 10 and an existing end surface 12 of the cylinder-shaped unit 3. The end surface 12 has an extension in a plane in a radial direction. The fitting part 10 is intended to receive an adapter 23 with the corresponding design as the fitting part 10, for instance with a cross section that is round, triangular, square, pentagonal, hexagonal or any other geometric shape. The adapter 23 comprises an outer part 24 with a design that corresponds to the fitting part 10 and an inner part 25 with a design with the corresponding measures as the guidance part 9 in the flange 8. The inner part 25 of the adapter 23, together with the inner section, form an extended guidance part 9 through that a channel 26 is formed. The extended guidance part thus comprises a part of the guidance part 9 of the frame screw 1 and lengthens the extension of the guidance part 9 in an axial direction.

An advantage with such an arrangement is that the tolerances of the guidance part 9 to the support part 15 of the fastening means 13 may be increased, i.e. that the allowance between the fastening means and the guidance part may be greater with an increased length and maintained radial freedom of motion.

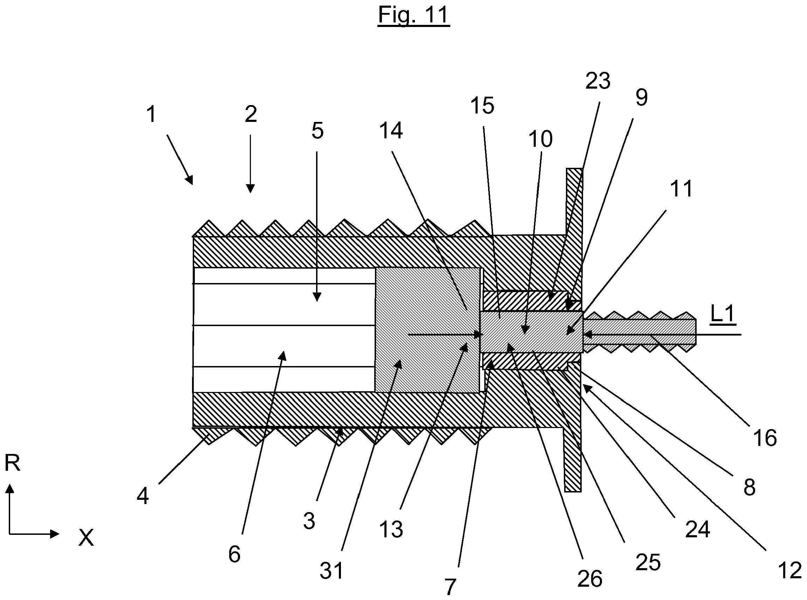

In figure 11 an alternative fourth embodiment is shown where the adapter 23 is designed to fit into both the fitting part 10 and the inner section of the flange. The inner part 25 of the adapter 23 thus constitutes the whole of the guidance part 9 of the frame screw 1 and can be adjusted to desired tolerances. An increased tolerance may give rise to a less expensive manufacturing process of the frame screw and additionally may frame screws according to prior art be converted to a better and more robust frame screw 1. In figure 11 as in figure 2 it is shown that the second section comprises the fitting part 10 and that the flange 8 is arranged in the third section.

Another advantage with the embodiments shown in figure 10 and 11 is that the adapter does not risk being pushed out of the channel 5 when the fastening means is inserted into the channel 5 since the flange 8 constitutes a blocking part for the adapter 23. Since the adapter 23 is not able to be pushed out of the channel 5 of the cylinder-shaped unit 3 the tolerances can be small between the support part 16 and the formed channel 26, i.e. between the support part 15 and the guidance part 9.

The inner section of the flange 8 may be circular or have a cross section according to the fitting part described in conjunction to figure 1 and that admits for the fitting of a tool for rotating the cylinder-shaped unit 3 during assembly of a frame.

The adapter 23 can be manufactured of plastic and/or metal and/or any other material that easily and inexpensively can be shaped according to the description above.

An advantage with a relatively soft adapter 23 is that the fastening means 13 can form the adapter 23 by means of an axial pressure when the fastening means is arranged in a receiving unit, for instance in the shape of a wall.

With "form" it is here meant that the shape of the adapter is transformed under pressure. The adapter can for instance be somewhat longer than the channel 5 which gives that the protruding part of the adapter is inserted into the channel when the head 14 of the fastening means 13 is brought to press upon the adapter. When the protruding part is inserted into the channel 5 the amount of mass in the channel increases which narrows the guidance part which in turn reduces the freedom of motion of the fastening means.

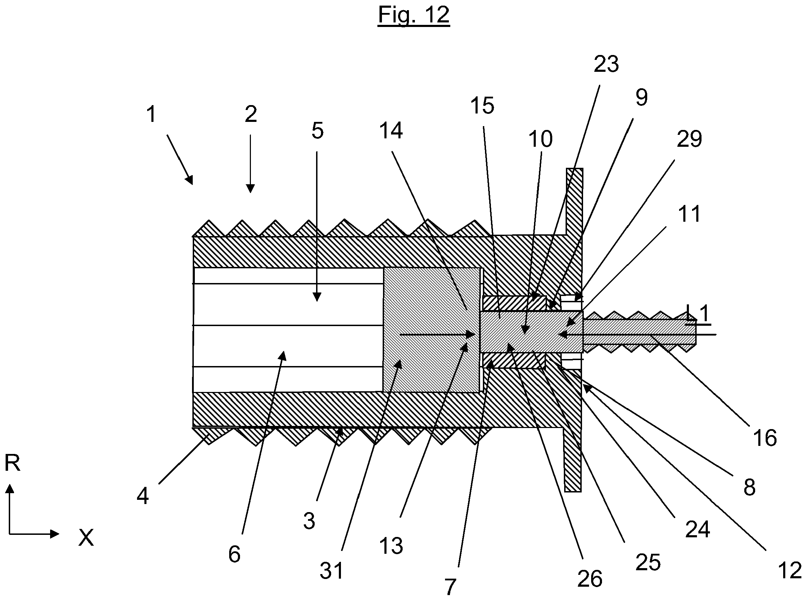

Fig. 12 schematically shows a frame screw 1 comprising a fastening means 13, a casing 2 and an adapter 23 according to a fifth embodiment of the invention. The frame screw according to figure 12 is identical to the frame screw according to figure 10 with the advantages there mentioned, but with the following differences. The frame screw in figure 12 has a second fitting part 29 positioned between the flange 8 and the end surface 12 of the cylinder-shaped unit. The second fitting part 29 may as the first fitting part according to figure 5 be adjusted to receive a tool for rotating the cylinder-shaped unit 3 during the mounting of a frame.

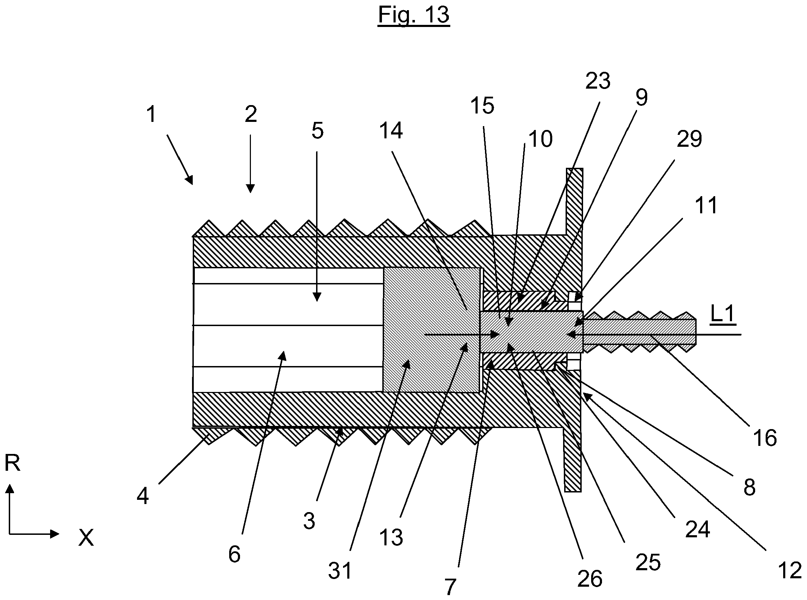

Fig. 13 schematically shows a frame screw 1 according to a sixth embodiment of the invention. The frame screw according to figure 13 is identical to the frame screw 1 according to figure 11 with the advantages there mentioned, but with the following differences. The frame screw in figure 13 has a second fitting part 29 positioned between the flange 8 and the end surface 12 of the cylinder-shaped unit 3. The second fitting part 29 may as the first fitting part according to figure 5 be adjusted to receive a tool for rotating the cylinder-shaped unit 3 during the mounting of a frame.

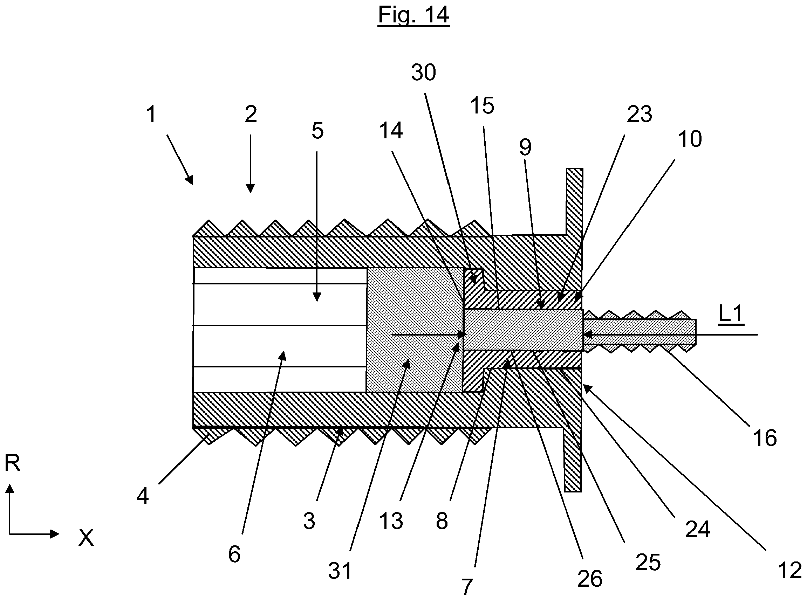

Fig. 14 schematically shows a frame screw 1 comprising a fastening means 13, a casing 2 and an adapter 23 according to a seventh embodiment of the invention. The frame screw 1 according to figure 14 is identical to the frame screw 1 of figure 8 but with the difference that the adapter 23 comprises a second flange 30 intended to be arranged between the head 14 of the fastening means 13 and the flange 8. In fig. 14 it is additionally shown that the frame screw comprises a fitting part 10 according to figure 7 arranged between the flange 8 and the end surface 12 of the casing 2. The outer part of the adapter 24 is designed to fit into the channel 5 which is constituted by the inner jacket surface of the first section 6 and the inner jacket surface of the inner section of the flange 8. The first section 6 of the channel 5 is preferably arranged to receive a tool for rotating the casing 2. The first section 6 can thus be designed to be edged, for instance triangular, square, pentagonal, hexagonal etc. which has been described earlier. The second flange 30 of the adapter 23 is preferably designed in the corresponding way in order to fit the profile which is constituted by the channel 5 of the first section. The adapter 23 can additionally be designed to fit into the fitting part 10 as the fitting part 10 is designed with elevations that extends into the channel 5 in such a way that the adapter may be in contact with the elevations. The fitting part 10 in figure 14 can be left out in accordance with what is mentioned in conjunction to figure 8.

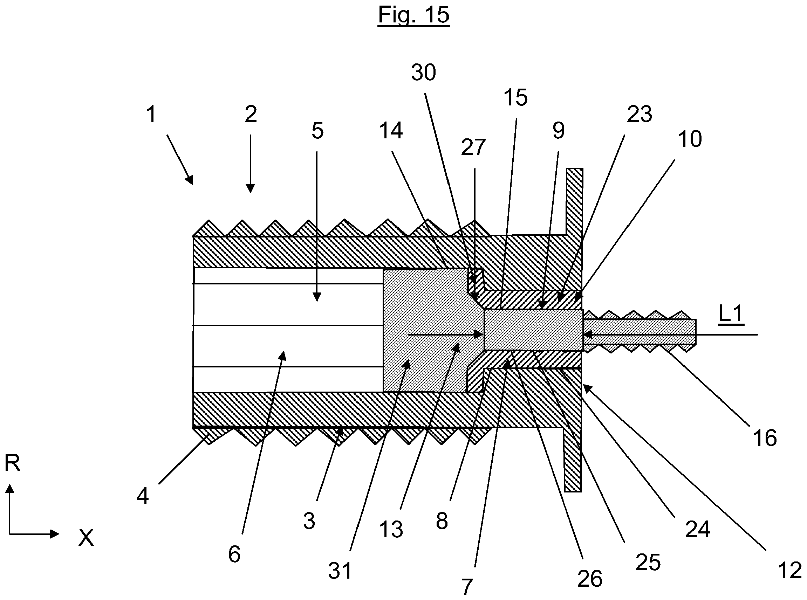

Fig. 15 schematically shows a frame screw 1 comprising a fastening means 13, a casing 2 and an adapter 23 according to an eighth embodiment of the invention. The frame screw 1 according to figure 15 is identical to the frame screw 1 according to figure 9 but with the difference that the adapter 23 comprises a second flange 30 intended to be arranged between the head 14 of the fastening means 13 and the flange 8. In figure 15 it is shown that the second flange comprises an especially adjusted section 27 in the shape of a truncated cone and that the head 14 of the fastening means has a corresponding design. The especially designed sections 27 gives a stable joining bond between the fastening means 13 and the adapter 23.

In figure 15 it is additionally shown that the frame screw comprises a fitting part 10 according to figure 7 arranged between the flange 8 and the end surface 12 of the casing 2. The outer part of the adapter 24 is designed to fit into the channel 5 which is constituted by the inner jacket surface of the inner section 6 and the inner jacket surface of the flange 8. The first section 6 of the channel 5 is preferably arranged to receive a tool for rotating the casing 2. The first section 6 can thus be designed to be edged, for instance triangular, square, pentagonal, hexagonal etc. which has been described earlier. The second flange 30 of the adapter 23 is preferably designed in the corresponding way to fit into the profile that is constituted by the channel 5 of the first section. The adapter 23 may additionally be designed to fit into the fitting part 10 as the fitting part 10 is designed with elevations that extends into the channel 5 in such a way that the adapter can be in contact with the elevations. The fitting part 10 in figure 15 can be left out in accordance with what is mentioned in conjunction to figure 8.

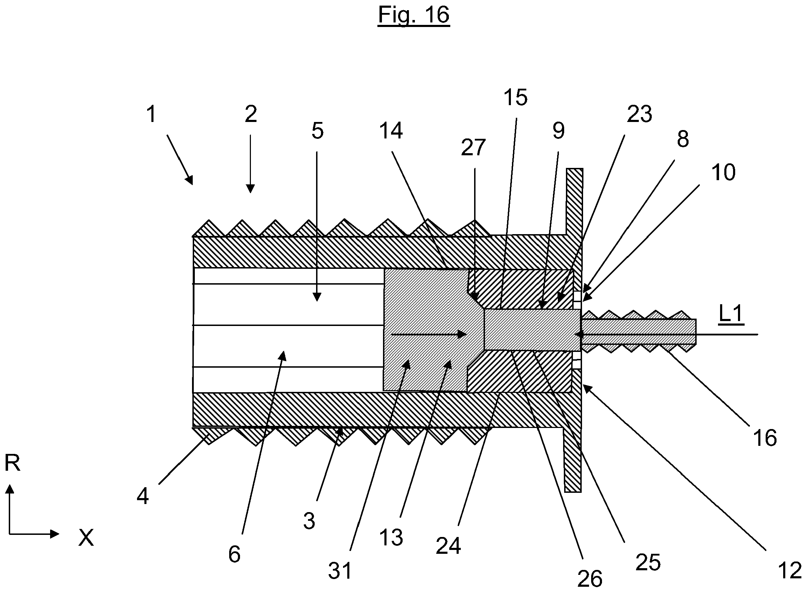

Fig. 16 schematically shows a frame screw 1 comprising a fastening means 13, a casing 2 and an adapter 23 according to a ninth embodiment of the invention. The frame screw 1 according to figure 16 is identical to the frame screw 1 according to figure 10 but with the difference that the casing comprises only a first section 6 and a flange 8. The channel 5 is thus constituted by the inner jacket surface of the first section 6 and the inner jacket surface of the flange 8. The flange 8 may comprise an especially designed fitting part 10 arranged to receive a tool for rotating the case during assembly, but can also be arranged with a circular cross section.

In figure 16 the adapter is designed to fit into the profile being constituted by the inner jacket surface of the first section 6. The outer part of the adapter 24 is designed to fit into the channel 5 being constituted by the inner jacket surface of the first section 6 and the inner jacket surface of the flange 8. The first section 6 of the channel 5 is preferably arranged to receive a tool for rotating the casing 2. The first section 6 can thus be designed to be edged, for instance triangular, square, pentagonal, hexagonal etc which has been described earlier. The outer part 24 of the adapter 23 is preferably designed in the corresponding way to fit into the profile being constituted by the channel 5 of the first section.

The adapter 23 has a length L1 in the channel 5 measured from the flange. The inner part 25 of the adapter 23 forms a through-and-through channel with a diameter D1, adjusted to the length L1, which constitutes a guidance part 9 for the fastening means 13. The fastening means 13 is intended to be arranged in the guidance part 9 and the adapter 23 is designed to prevent the fastening means 13 from moving to much in relation to the central axis of the cylinder-shaped unit 3.

In a different embodiment of the invention the adapter 23 comprises a second flange 30 intended to fit into the part of the channel 5 that is formed by the inner jacket surface of the flange 8. An advantage with this is that the guidance part is lengthened further which reduces the tolerance requirements on the diameter D1.

In figure 16 it is shown that the adapter 23 comprises an especially adjusted section 27 in the shape of a truncated cone and that the head 14 of the fastening means 13 has a corresponding design. The especially designed sections 27 gives a stabile joining bond between the fastening means 13 and the adapter 23. The adapter 23 and the head 14 may however be designed without the especially adjusted sections 27, i.e. both the adapter 23 and the head can be designed with straight sections.

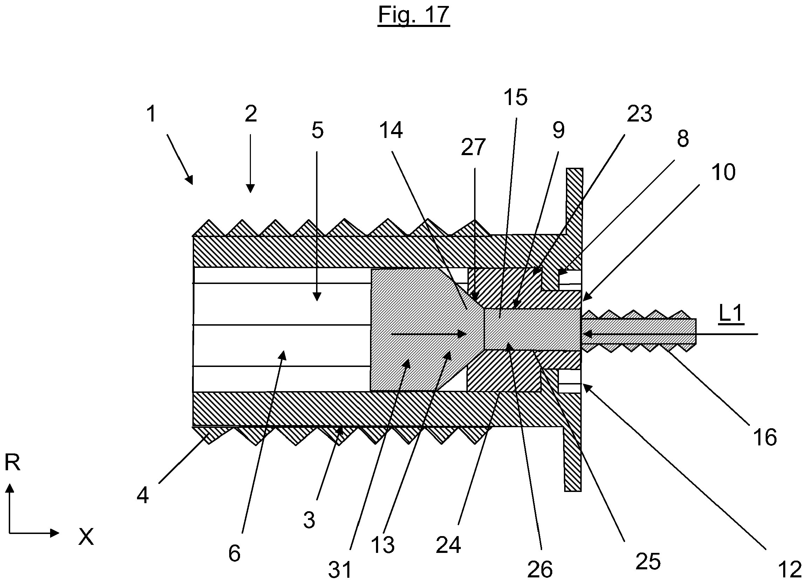

Fig. 17 schematically shows a frame screw comprising a fastening means, a casing and an adapter according to a tenth embodiment of the invention. The frame screw 1 according to figure 17 is identical to the frame screw 1 according to figure 16 but with the difference that the casing only comprises a first section 6, a flange 8 and a fitting part 10. The flange 8 is positioned between the fitting tool 10 and the first section 6. The fitting part 10 is arranged to receive a tool for rotating the casing during assembly. The channel 5 is thus constituted by the inner jacket surface of the first section 6, the inner jacket surface of the flange 8 and the inner jacket surface of the fitting part 10. The inner jacket surface is preferably designed with an essentially circular cross section.

In figure 17 the adapter 23 is designed to fit into the profile that is constituted by the inner jacket surface of the first section 6. The outer part 24 of the adapter is designed to fit into the channel 5 which is constituted by the inner jacket surface of the first section 6 and the inner jacket surface of the flange 8. The first section 6 of the channel 5 is preferably arranged to receive a tool for rotating the casing 2. The first section 6 may thus be designed to be edged, for instance triangular, square, pentagonal, hexagonal etc. which has been described earlier. The outer part 24 of the adapter 23 is preferably designed in the corresponding way to fit into the profile that is constituted by the channel 5 in the first section.

The adapter 23 has a length L1 in the channel 5 measured from the flange. The inner part 25 of the adapter 23 forms a through-and-through channel with a diameter D1 adjusted to the length L1 that constitutes a guidance part 9 for the fastening means 13. The fastening means 13 is intended to be arranged in the guidance part 9 and the adapter 23 is designed to prevent the fastening means 13 from moving to much in relation to the central axis of the cylinder-shaped unit 3.

In figure 17 it is shown that the adapter 23 comprises a second flange 30 intended to fit into that part of the channel 5 that is formed by the inner jacket surface of the flange 8. In figure 17 it is also shown that the second flange is arranged to fit into the fitting part 10. The fitting part 10 comprises a number of elevations that extends in a direction towards the centre of the channel. The elevations together form support surfaces for the adapter 23 in such a way that the position of the adapter 23 is locked in the fitting part. The adapter 23 thus has an extension in the channel 5 between the head 14 of the fastening means 13 and the end surface 12 of the cylinder-shaped unit. An advantage with this is that the guidance part is lengthened further which further reduces the tolerance demand for the diameter D1. Mentionable is however that the second flange 30 may be shorter, i.e. can end before the end surface 12. The adapter 23 can thus have an extension that may vary between a distance that is constituted by the distance between the head 14 to at least a short distance into the flange and a distance that is constituted by the distance between the head 14 and the end surface 12.

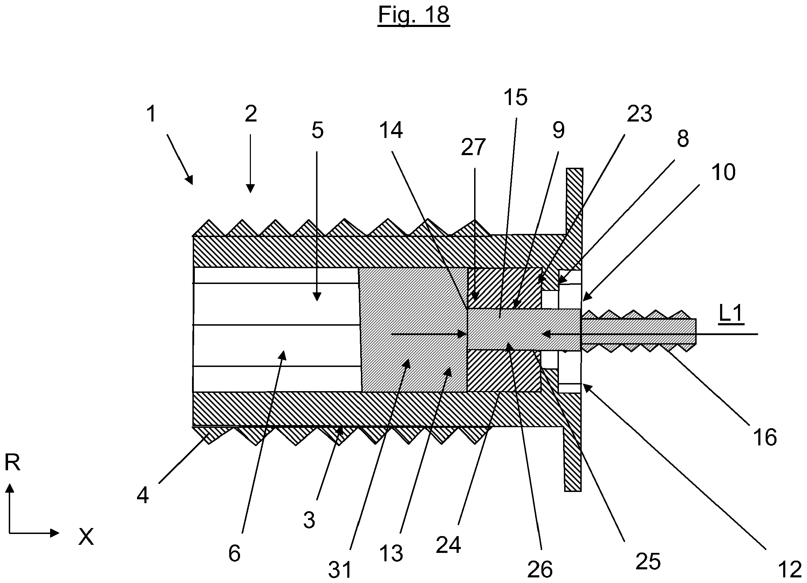

In figure 17 it is shown that the adapter 23 comprises an especially arranged section 27 in the shape of a truncated cone and that the head 14 of the fastening means 13 has a corresponding design. The especially designed sections 27 gives a stable joining bond between the fastening means 13 and the adapter 23. The adapter 23 and the head 14 can however be designed without the especially adjusted sections 27, i.e. both the adapter 23 and the head may be designed with straight sections, which is shown in figure 18.

Fig. 18 schematically shows a frame screw 1 comprising a fastening means 13, a casing 2 and an adapter 23 according to an eleventh embodiment of the invention. The frame screw 1 according to figure 18 is identical to the frame screw 1 according to figure 17 but with the difference that the adapter 23 and the fastening means lack the especially designed surfaces (27 in figure 17) and has essentially straight against each other lying contact surfaces. Another difference is that the adapter 23 in figure 18 has an extension between the head 14 and the flange 8.

In both figure 17 and 18 it is shown that the flange 8 is placed between the fitting part 10 and the first section 6. In the embodiments shown the fitting part 10 has the same measures as the first section 6, i.e. they are designed in the same way. An advantage with this is that the same tool can be used on the fitting part as on the first section 6.

A combination of the above mentioned embodiments is possible within the scope of the invention. As an example can be mentioned that a combination of the embodiments shown in figures 17 and 18 gives that the adapter 23 may have especially designed sections according to figure 17 but may also lack a second flange 30 according to figure 18. A combination of the figures 17 and 18 also gives that the adapter may lack the especially designed sections according to figure 17 but may comprise a second flange 30 according to figure 18.

A combination of the figures 5-7, 10-13 and 16-18 could give a first adapter 23 on the one side of the flange 8 and a second adapter 23 on the second side of the flange where the inner parts of the two adapters together form the guidance part 9. Also the inner jacket surface of the flange 8 may form the guidance part 9 together with the two adapters 23.

The invention is thus not limited to the embodiments described above but can vary within the scope of the subsequent claims. As an example it can be mentioned that the adapter 23 may comprise an especially adjusted section that has been described in conjunction to figure 9.

## Claims

1. Frame screw (1) comprising a cylinder-shaped unit (3) with a threaded outer casing (4) designed with a through-and-through channel (5; 26) in an axial direction comprising a first section (6) at least partly designed with a cross section D3 in a radial direction suitable for fitting a tool for rotating the cylinder-shaped unit (3) and a flange (8) comprising an inner section where the frame screw (1) comprises a fastening means (13) whereby the fastening means (13) has a head (31) with an outer part (32) arranged to fit into the first section (6), where the first section (6) has a cross section D3 (D3) in a radial direction adjusted to a length L6 (L6) in an axial direction and a cross section D4 (D4) in a radial direction of the head (31) in such a way that the inner side (33) of the first section (6) limits the possibility of the head to tilt which limits the freedom of motion of an existing central axis of the fastening means (13) in relation to an existing central axis of the cylinder-shaped unit (3) to a motion of a maximally predetermined range at the end surface (12) of the cylinder-shaped unit (3),
   **characterized in that** the fastening means is suitable to fit in the channel (5, 26) and the inner section such that the fastening means can run free in the channel in the axial direction and that the cylinder-shaped unit can be rotated around the fastening means when the fastening means is firmly arranged in an outer unit.

2. Frame screw (1) according to claim 1, **characterized in that** the frame screw comprises an adapter (23) arranged at least partly in the channel, said adapter (23) comprises an outer part (24) arranged to fit into the channel (5) and an inner part (25) arranged to constitute at least a part of a guidance part (9), where the guidance part (9) has a cross section D1 (D1) in a radial direction adjusted to a length L1 (L1) of the guidance part (9) in an axial direction in such a way that the guidance part (9) limits the radial freedom of motion and the rotational freedom of motion of an existing central axis of the fastening means (13) in relation to an existing central axis of the guidance part (9) to a motion of a maximally predetermined range at the end surface (12) of the cylinder-shaped unit (3).

3.  Frame screw (1) according to claim 2, **characterized in that** the cross section D1 (D1) of the guidance part (9) in a radial direction is adjusted to a cross section D2 (D2) of an existing support part (15) of the fastening means (13) with a length L3 (L3).

4.  Frame screw (1) according to claim 2 or 3, **characterized in that** the channel (5) comprises an especially designed fitting part (10) placed in an axial direction of the other side of the flange (8) in relation to the first part (6).

5.  Frame screw (1) according to claim 2 or 3, **characterized in that** the channel (5) comprises an especially designed fitting part (10) placed in an axial direction between the flange (8) and the first section (6).

6.  Frame screw (1) according to claim 4 or 5, **characterized in that** the adapter (23) comprises an outer part (24) with a design that corresponds to the inner measure of the fitting part (10) and an inner part (25) with an inner jacket surface with corresponding measures as the inner jacket surface of the inner section in the flange (8), where the inner section of the flange (8) together with the inner part (25) of the adapter (23) constitutes the guidance part (9).

7.  Frame screw (1) according to claim 4 or 5, **characterized in that** the adapter (23) comprises an outer part (24) with a design that corresponds to the inner measure of the fitting part (10) and the inner section of the flange (8), where the inner part (25) of the adapter (23) constitutes the guidance part (9).

8.  Frame screw (1) according to claim 1 or 5, **characterized in that** the channel (5) only comprises the first section (6) and the flange (8).

9.  Frame screw (1) according to claim 1 or 8, **characterized in that** the adapter (23) is placed at least in the first section (6) and that the adapter comprises an outer part (24) with a design that corresponds to the inner measure of the first section (6), where the inner part (25) of the adapter (23) constitutes at least a part of the guidance part (9).

10. Frame screw (1) according to claim 9, **characterized in that** the adapter (23) is placed in the first section (6) and in the flange (8) and that the adapter (23) comprises an outer part (24) with a design that corresponds to the inner measure of the first section (6) and the inner measure of the flange (8), where the inner part (25) of the adapter (23) constitutes at least a part of the guidance part (9).

11. Frame screw (1) according to any of the claims 1-3, **characterized in that** the flange (8) extends all the way to an existing end surface (12) of the cylinder-shaped unit (3), where the inner jacket surface of the flange (8) forms a guidance part (9) adjusted to a cross section D2 (D2) of an existing support part (15) of the fastening means (13) with a length L3 (L3).

12. Frame screw (1) according to any of the previous claims 2-11, **characterized in that** the guidance part (9) and the support part (15) is designed after the following parameters and mutual distances for calculation of the motion of the central axis of the fastening means at the end surface of the cylinder-shaped unit (3);

    L1 = the length of the guidance part in axial direction
    L2 = the distance between the guidance part and the end surface (including the guidance part) of the cylinder-shaped unit
    D1 = the diameter of the guidance part
    L3 = the length of the guidance part in axial direction along the central axis of the fastening means
    L4 = the distance between the head of the fastening means and the end surface (excluding the head) of the cylinder-shaped unit along the central axis of the fastening means as the head of the fastening means is in contact with the flange.
    D2 = the diameter of the support part
    $\alpha$ = the angle between the central axis of the fastening means and the central axis of the guidance part
    Rradiell = the maximal radial motion of the central axis of the fastening means for given L1-L4, D1 and D2 in relation to the central axis of the cylinder arrangement.
    Rvrid = the maximal rotational motion of the central axis of the fastening means for given L1-L4, D1 and D2 in relation to the central axis of the cylinder arrangement.

$$Rradiell = (D1-D2)/2$$

$$\alpha = \text{arctan}((D1-D2)/L1)$$

$$Rvrid = L4 \times \tan(\alpha) \times 1/2$$

$$Rvrid = L4 \times (D1-D2)/L1 \times 1/2$$

**13.** Frame screw (1) according to claim 12, **characterized in that** L2 ≥ L1; L1 ≤ L3; and where L4 ≤ L3.

**14.** Frame screw (1) according to any of the preceding claims, **characterized in that** the head (31) is designed after the following parameters for calculation of the motion of the central axis of the fastening means at the end surface of the cylinder-shaped unit (3)

L6 = the length of the head in the axial direction
D3 = the smallest length of the first section
D4 = the greatest length of the head
L4 = the distance between the head of the fastening means and end surface of the cylinder-shaped unit (excluding the head) along the central axis of the fastening means as the head of the fastening means is in contact with the flange
α = the angle between the central axis of the head and the central axis of the guidance arrangement
Rrad2 = the maximal radial motion of the central axis of the fastening means for given L4, L6, D3 and D4 in relation to the central axis of the cylinder arrangement.
Rvrid2 = the maximal rotational motion of the central axis of the fastening means for given L4, L6, D3 and D4 in relation to the central axis of the cylinder arrangement.

$$Rrad2 = (D3-D4)/2$$

$$\alpha = \text{arcsin}((2 \times Rrad2)/L6) \text{ for small angles } \alpha$$

$$Rvrid2 = L4 \times \tan(\alpha) \times 1/2$$

**15.** Frame screw (1) according to claim 14, **characterized in that** D3 > D4.

**Patentansprüche**

**1.** Rahmenschraube (1), die eine zylinderförmige Einheit (3) mit einer äußeren Gewindehülse (4) umfasst, die mit einem durchgehenden Kanal (5; 26) in einer Axialrichtung ausgebildet ist, der einen ersten Abschnitt (6) umfasst, der zumindest teilweise mit einem Querschnitt D3 in einer Radialrichtung, welcher für das Anbringen eines Werkzeugs zum Drehen der zylinderförmigen Einheit (3) geeignet ist, und einem einen Innenabschnitt umfassenden Flansch (8) ausgebildet ist, wobei die Rahmenschraube (1) ein Befestigungsmittel (13) umfasst, wobei das Befestigungsmittel (13) einen Kopf (31) mit einem Außenteil (32) aufweist, der so angeordnet ist, dass er in den ersten Abschnitt (6) passt, wobei der erste Abschnitt (6) einen Querschnitt D3 (D3) in einer Radialrichtung, der auf eine Länge L6 (L6) in einer Axialrichtung angepasst ist, und einen Querschnitt D4 (D4) in einer Radialrichtung des Kopfes (31) aufweist, derart, dass die Innenseite (33) des ersten Abschnitts (6) die Möglichkeit des Kippens durch den Kopf einschränkt, was die Bewegungsfreiheit einer vorhandenen Mittelachse des Befestigungsmittels (13) in Bezug auf eine vorhandene Mittelachse der zylinderförmigen Einheit (3) auf eine Bewegung eines maximal vorgegebenen Bereichs an der Endfläche (12) der zylinderförmigen Einheit (3) begrenzt, **dadurch gekennzeichnet, dass** das Befestigungsmittel geeignet ist, um in den Kanal (5, 26) und den Innenabschnitt zu passen, so dass das Befestigungsmittel in der Axialrichtung frei in dem Kanal verlaufen kann, und dass die zylinderförmige Einheit um das Befestigungsmittel drehbar ist, wenn das Befestigungsmittel in einer äußeren Einheit fest angeordnet ist.

**2.** Rahmenschraube (1) nach Anspruch 1, **dadurch gekennzeichnet, dass** die Rahmenschraube einen zumindest teilweise in dem Kanal angeordneten Adapter (23) umfasst, wobei der Adapter (23) einen Außenteil (24), der so angeordnet ist, dass er in den Kanal (5) passt, und einen Innenteil (25), der so angeordnet ist, dass er zumindest einen Teil eines Führungsteils (9) darstellt, umfasst, wobei der Führungsteil (9) einen Querschnitt D1 (D1) in einer Radialrichtung aufweist, welcher auf eine Länge L1 (L1) des Führungsteils (9) in einer Axialrichtung derart angepasst ist, dass der Führungsteil (9) die radiale Bewegungsfreiheit und die Rotationsbewegungsfreiheit einer vorhandenen Mittelachse des Befestigungsmittels (13) in Bezug auf eine vorhandene Mittelachse des Führungsteils (9) auf eine Bewegung eines maximal vorgegebenen Bereichs an der Endfläche (12) der zylinderförmigen Einheit (3) begrenzt.

**3.** Rahmenschraube (1) nach Anspruch 2, **dadurch gekennzeichnet, dass** der Querschnitt D1 (D1) des Führungsteils (9) in einer Radialrichtung auf einen Querschnitt D2 (D2) eines vorhandenen Trägerteils (15) des Befestigungsmittels (13) mit einer Länge L3 (L3) angepasst ist.

**4.** Rahmenschraube (1) nach Anspruch 2 oder 3, **dadurch gekennzeichnet, dass** der Kanal (5) einen speziell ausgestalteten Anbringungsteil (10) umfasst, der in Bezug auf den ersten Teil (6) in einer Axialrichtung von der anderen Seite des Flanschs (8) angeordnet ist.

**5.** Rahmenschraube (1) nach Anspruch 2 oder 3, **dadurch gekennzeichnet, dass** der Kanal (5) einen speziell ausgestalteten Anbringungsteil (10) umfasst, der in einer Axialrichtung zwischen dem Flansch (8) und dem ersten Abschnitt (6) angeordnet ist.

**6.** Rahmenschraube (1) nach Anspruch 4 oder 5, **dadurch gekennzeichnet, dass** der Adapter (23) einen Außenteil (24) mit einer dem Innenmaß des Anbringungsteils (10) entsprechenden Gestalt und einen Innenteil (25) mit einer inneren Mantelfläche mit entsprechenden Maßen wie die innere Mantelfläche des Innenabschnitts in dem Flansch (8) umfasst, wobei der Innenabschnitt des Flanschs (8) zusammen mit dem Innenteil (25) des Adapters (23) den Führungsteil (9) darstellt.

**7.** Rahmenschraube (1) nach Anspruch 4 oder 5, **dadurch gekennzeichnet, dass** der Adapter (23) einen Außenteil (24) mit einer dem Innenmaß des Anbringungsteils (10) und dem Innenabschnitt des Flanschs (8) entsprechenden Gestalt umfasst, wobei der Innenteil (25) des Adapters (23) den Führungsteil (9) darstellt.

**8.** Rahmenschraube (1) nach Anspruch 1 oder 5, **dadurch gekennzeichnet, dass** der Kanal (5) nur den ersten Abschnitt (6) und den Flansch (8) umfasst.

**9.** Rahmenschraube (1) nach Anspruch 1 oder 8, **dadurch gekennzeichnet, dass** der Adapter (23) zumindest in dem ersten Abschnitt (6) angeordnet ist, und dass der Adapter einen Außenteil (24) mit einer dem Innenmaß des ersten Abschnitts (6) entsprechenden Gestalt umfasst, wobei der Innenteil (25) des Adapters (23) zumindest einen Teil des Führungsteils (9) darstellt.

**10.** Rahmenschraube (1) nach Anspruch 9, **dadurch gekennzeichnet, dass** der Adapter (23) in dem ersten Abschnitt (6) und in dem Flansch (8) angeordnet ist, und dass der Adapter (23) einen Außenteil (24) mit einer dem Innenmaß des ersten Abschnitts (6) und dem Innenmaß des Flanschs (8) entsprechenden Gestalt umfasst, wobei der Innenteil (25) des Adapters (23) zumindest einen Teil des Führungsteils (9) darstellt.

**11.** Rahmenschraube (1) nach einem der Ansprüche 1 bis 3,
**dadurch gekennzeichnet, dass** sich der Flansch (8) bis zu einer vorhandenen Endfläche (12) der zylinderförmigen Einheit (3) erstreckt, wobei die innere Mantelfläche des Flanschs (8) einen Führungsteil (9) bildet, der auf einen Querschnitt D2 (D2) eines vorhandenen Trägerteils (15) des Befestigungsmittels (13) mit einer Länge L3 (L3) angepasst ist.

**12.** Rahmenschraube (1) nach einem der vorgehenden Ansprüche 2 bis 11, **dadurch gekennzeichnet, dass** der Führungsteil (9) und der Trägerteil (15) nach den folgenden Parametern und gegenseitigen Abständen zur Berechnung der Bewegung der Mittelachse des Befestigungsmittels an der Endfläche der zylinderförmigen Einheit (3) ausgestaltet sind;

L1 = die Länge des Führungsteils in Axialrichtung
L2 = der Abstand zwischen Führungsteil und der Endfläche (einschließlich des Führungsteils) der zylinderförmigen Einheit

D1 = der Durchmesser des Führungsteils

L3 = die Länge des Führungsteils in Axialrichtung entlang der Mittelachse des Befestigungsmittels

L4 = der Abstand zwischen dem Kopf des Befestigungsmittels und der Endfläche (ausschließlich des Kopfes) der zylinderförmigen Einheit entlang der Mittelachse des Befestigungsmittels, da der Kopf des Befestigungsmittels mit dem Flansch in Kontakt steht.

D2 = der Durchmesser des Trägerteils

$\alpha$ = der Winkel zwischen der Mittelachse des Befestigungsmittels und der Mittelachse des Führungsteils

Rradiell = die maximale radiale Bewegung der Mittelachse des Befestigungsmittels für gegebene L1-L4, D1 und D2 in Bezug auf die Mittelachse der Zylinderanordnung.

Rvrid = die maximale Rotationsbewegung der Mittelachse des Befestigungsmittels für gegebene L1-L4, D1 und D2 in Bezug auf die Mittelachse der Zylinderanordnung.

$$\text{Rradiell} = (D1-D2)/2$$

$$\alpha = \text{Arctan}((D1-D2)/L1)$$

$$\text{Rvrid} = L4 \times \tan(\alpha) \times 1/2$$

$$\text{Rvrid} = L4 \times (D1-D2)/L1 \times 1/2$$

**13.** Rahmenschraube (1) nach Anspruch 12, **dadurch gekennzeichnet, dass** L2 $\geq$ L1; L1 $\leq$ L3; und wobei L4 $\leq$ L3.

**14.** Rahmenschraube (1) nach einem der vorgehenden Ansprüche, **dadurch gekennzeichnet, dass** der Kopf (31) nach den folgenden Parametern zur Berechnung der Bewegung der Mittelachse des Befestigungsmittels an der Endfläche der zylinderförmigen Einheit (3) ausgestaltet ist

L6 = die Länge des Kopfes in der Axialrichtung

D3 = die kleinste Länge des ersten Abschnitts

D4 = die größte Länge des Kopfes

L4 = der Abstand zwischen dem Kopf des Befestigungsmittels und der Endfläche der zylinderförmigen Einheit (ausschließlich des Kopfes) entlang der Mittelachse des Befestigungsmittels, da der Kopf des Befestigungsmittels mit dem Flansch in Kontakt steht.

$\alpha$ = der Winkel zwischen der Mittelachse des Kopfes und der Mittelachse der Führungsanordnung

Rrad2 = die maximale radiale Bewegung der Mittelachse des Befestigungsmittels für gegebene L4, L6, D3 und D4 in Bezug auf die Mittelachse der Zylinderanordnung.

Rvrid2 = die maximale Rotationsbewegung der Mittelachse des Befestigungsmittels für gegebene L4, L6, D3 und D4 in Bezug auf die Mittelachse der Zylinderanordnung.

$$\text{Rrad2} = (D3-D4)/2$$

$$\alpha = \text{Arcsin}((2 \times \text{Rrad2})/L6) \text{ für kleine Winkel } \alpha$$

$$\text{Rvrid2} = L4 \times \tan(\alpha) \times 1/2$$

**15.** Rahmenschraube (1) nach Anspruch 14, **dadurch gekennzeichnet, dass** D3 > D4.

**Revendications**

**1.** Vis de cadre (1) comprenant une unité cylindrique (3) avec une enveloppe extérieure filetée (4) conçue avec un canal traversant (5; 26) dans une direction axiale comprenant une première section (6) au moins en partie conçue avec une section transversale D3 dans une direction radiale appropriée pour adapter un outil pour faire tourner l'unité cylindrique (3) et une bride (8) comprenant une section intérieure (9) où la vis de cadre (1) comprend un moyen de fixation (13), ledit moyen de fixation (13) ayant une tête (31) avec une partie extérieure (32) agencée pour s'insérer dans le première section (6), où la première section (6) a une section transversale D3 (D3) dans une direction radiale ajustée à une longueur L6 (L6) dans une direction axiale et une section transversale D4 (D4) dans une direction radiale de la tête (31) de manière à ce que le côté intérieur (33) de la première section (6) limite la possibilité d'inclinaison de la tête, ce qui limite la liberté de mouvement d'un axe central existant du moyen de fixation (13) par rapport à un axe central existant de l'unité cylindrique (3) jusqu'à un mouvement d'une plage prédéterminée au maximum à la surface d'extrémité (12) de l'unité cylindrique (3), **caractérisée en ce que** le moyen de fixation est apte à s'adapter dans le canal (5, 26) et la section intérieure si bien que le moyen de fixation peut s'étendre librement dans le canal dans la direction axiale et que l'unité cylindrique peut être tournée autour du moyen de fixation lorsque le moyen de fixation est arrangé de manière fixe dans l'unité extérieure.

2. Vis de cadre (1) selon la revendication 1, **caractérisée en ce que** la vis de cadre comprend un adaptateur (23) disposé au moins partiellement dans le canal, ledit adaptateur (23) comprend une partie extérieure (24) agencée pour s'insérer dans le canal (5) et une partie intérieure (25) agencée pour constituer au moins une portion d'une partie de guidage (9), la partie de guidage (9) ayant une section transversale D1 (D1) dans une direction radiale ajustée à une longueur L1 (L1) de la partie de guidage (9) dans une direction axiale de telle sorte que la partie de guidage (9) limite la liberté de mouvement radiale et la liberté de mouvement rotationnelle d'un axe central existant du moyen de fixation (13) par rapport à l'axe central existant de la partie de guidage (9) jusqu'à un mouvement d'une plage prédéterminée au maximum à la surface d'extrémité (12) de l'unité cylindrique (3).

3. Vis de cadre (1) selon la revendication 2, **caractérisée en ce que** la section transversale D1 (D1) de la partie de guidage (9) dans une direction radiale est ajustée à une section transversale D2 (D2) d'une pièce de support existante (15) du moyen de fixation (13) d'une longueur L3 (L3).

4. Vis de cadre (1) selon la revendication 2 ou 3, **caractérisée en ce que** le canal (5) comprend une pièce de raccord (10) spécialement conçue et placée dans une direction axiale de l'autre côté de la bride (8) par rapport à la première partie (6).

5. Vis de cadre (1) selon la revendication 2 ou 3, **caractérisée en ce que** le canal (5) comprend une pièce de raccord (10) spécialement conçue et placée dans une direction axiale entre la bride (8) et la première section (6).

6. Vis de cadre (1) selon la revendication 4 ou 5, **caractérisée en ce que** l'adaptateur (23) comprend une partie extérieure (24) avec une conception qui correspond à la mesure intérieure de la pièce de raccord (10) et une partie intérieure (25) avec une surface de gaine intérieure avec des mesures correspondantes en tant que surface de gaine intérieure de la section intérieure dans la bride (8), où la section intérieure de la bride (8) avec la partie intérieure (25) de l'adaptateur (23) constitue la partie de guidage (9).

7. Vis de cadre (1) selon la revendication 4 ou 5, **caractérisée en ce que** l'adaptateur (23) comprend une partie extérieure (24) avec une conception qui correspond à la mesure intérieure de la pièce de raccord (10) et à la section intérieure de la bride (8), où la partie intérieure (25) de l'adaptateur (23) constitue la partie de guidage (9).

8. Vis de cadre (1) selon la revendication 1 ou 5, **caractérisée en ce que** le canal (5) ne comprend que la première section (6) et la bride (8).

9. Vis de cadre (1) selon la revendication 1 ou 8, **caractérisée en ce que** l'adaptateur (23) est arrangé au moins dans la première section (6), et que l'adaptateur comprend une partie extérieure (24) avec une conception qui correspond à la mesure intérieure de la première section (6), où la partie intérieure (25) de l'adaptateur (23) constitue au moins une portion de la partie de guidage (9).

10. Vis de cadre (1) selon la revendication 9, **caractérisée en ce que** l'adaptateur (23) est arrangé dans la première section (6) et dans la bride (8), et que l'adaptateur (23) comprend une partie extérieure (24) avec une conception qui correspond à la mesure intérieure de la première section (6) et à la mesure intérieure de la bride (8), où la partie intérieure (25) de l'adaptateur (23) constitue au moins une portion de la partie de guidage (9).

11. Vis de cadre (1) selon l'une quelconque des revendications 1 à 3, **caractérisée en ce que** la bride (8) s'étend jusqu'à une surface d'extrémité existante (12) de l'unité cylindrique (3), la surface de gaine intérieure de la bride (8) forme une partie de guidage (9) ajustée à une section transversale D2 (D2) d'une pièce de support existante (15) du moyen de fixation (13) d'une longueur L3 (L3).

12. Vis de cadre (1) selon l'une quelconque des revendications précédentes 2 à 11, **caractérisée en ce que** la partie de guidage (9) et la pièce de support (15) sont conçues d'après les paramètres suivants et les distances mutuelles pour le calcul du mouvement de l'axe central du moyen de fixation à la surface d'extrémité de l'unité cylindrique (3) ;

L1 = la longueur de la partie de guidage dans la direction axiale

L2 = la distance entre la partie de guidage et la surface d'extrémité (y compris la partie de guidage) de l'unité cylindrique

D1 = le diamètre de la partie de guidage

L3 = la longueur de la partie de guidage dans la direction axiale le long de l'axe central du moyen de fixation

L4 = la distance entre la tête du moyen de fixation et la surface d'extrémité (à l'exclusion de la tête) de l'unité cylindrique le long de l'axe central du moyen de fixation lorsque la tête du moyen de fixation est en contact avec la bride.

D2 = le diamètre de la pièce de support

$\alpha$ = l'angle entre l'axe central du moyen de fixation et l'axe central de la partie de guidage

Rradiell = le mouvement radial maximal de l'axe central du moyen de fixation pour L1-L4, D1 et D2 donnés par rapport à l'axe central de l'agencement de cylindre.

Rvrid = le mouvement de rotation maximal de l'axe central du moyen de fixation pour L1-L4, D1 et D2 donnés par rapport à l'axe central de l'agencement de cylindre.

$$\text{Rradiell} = (D1-D2)/2$$

$$\alpha = \arctan((D1-D2)/L1)$$

$$\text{Rvrid} = L4 \times \tan(\alpha) \times 1/2$$

$$\text{Rvrid} = L4 \times (D1-D2)/L1 \times 1/2$$

13. Vis de cadre (1) selon la revendication 12, **caractérisée en ce que** L2 $\geq$ L1; L1 $\leq$ L3 ; et où L4 $\leq$ L3.

14. Vis de cadre (1) selon l'une quelconque des revendications précédentes, **caractérisée en ce que** la tête (31) est conçue d'après les paramètres suivants pour le calcul du mouvement de l'axe central du moyen de fixation à la surface d'extrémité de l'unité cylindrique (3)

L6 = la longueur de la tête dans la direction axiale

D3 = la plus petite longueur de la première section

D4 = la plus grande longueur de la tête

L4 = la distance entre la tête du moyen de fixation et la surface d'extrémité de l'unité cylindrique (à l'exclusion de la tête) le long de l'axe central du moyen de fixation lorsque la tête du moyen de fixation est en contact avec la bride.

$\alpha$ = l'angle entre l'axe central de la tête et l'axe central du dispositif de guidage Rrad2 = le mouvement radial maximal de l'axe central du moyen de fixation pour L4, L6, D3 et D4 donnés par rapport à l'axe central de l'agencement de cylindre.

Rvrid2 = le mouvement de rotation maximal de l'axe central du moyen de fixation pour L4, L6, D3 et D4 donnés par rapport à l'axe central de l'agencement de cylindre.

$$\text{Rrad2} = (D3-D4)/2$$

$$\alpha = \arcsin((2 \times Rrad2)/L6) \text{ pour les petits angles } \alpha$$

$$Rvrid2 = L4 \times \tan(\alpha) \times 1/2$$

**15.** Vis de cadre (1) selon la revendication 14, **caractérisée en ce que** D3 > D4.

## Fig. 1

(Prior art)

EP 2 281 097 B1

Fig. 2
(Prior art)

EP 2 281 097 B1

## Fig. 3

## (Prior art)

Fig. 4
(Prior art)

Rvrid

α

18

22

13

3

1

17

L5

19

21

20

Fig. 5a

Fig. 5c

Fig. 5b

EP 2 281 097 B1

Fig. 6

EP 2 281 097 B1

Fig. 7

EP 2 281 097 B1

## Fig. 8

Fig. 9

EP 2 281 097 B1

Fig. 10

EP 2 281 097 B1

Fig. 11

EP 2 281 097 B1

## Fig. 12

EP 2 281 097 B1

Fig. 13

Fig. 14

Fig. 15

EP 2 281 097 B1

Fig. 16

Fig. 17

EP 2 281 097 B1

40

Fig. 18

**EP 2 281 097 B1**

**Patent documents cited in the description**

- WO 9801647 A

- WO 2007145584 A1